(19) **Europäisches Patentamt / European Patent Office / Office européen des brevets**

(11) **EP 1 728 092 B1**

(12) **EUROPÄISCHE PATENTSCHRIFT**

(45) Veröffentlichungstag und Bekanntmachung des Hinweises auf die Patenterteilung:
**15.08.2007 Patentblatt 2007/33**

(21) Anmeldenummer: 05732032.7

(22) Anmeldetag: **10.03.2005**

(51) Int Cl.:
**G01S 1/00** *(2006.01)*

(86) Internationale Anmeldenummer:
**PCT/DE2005/000434**

(87) Internationale Veröffentlichungsnummer:
**WO 2005/088332 (22.09.2005 Gazette 2005/38)**

(54) **VERFAHREN UND VORRICHTUNG ZUM VERARBEITEN VON SATELLITENSIGNALEN**

METHOD AND DEVICE FOR PROCESSING SATELLITE SIGNALS

PROCEDE ET DISPOSITIF DE TRAITEMENT DE SIGNAUX DE SATELLITE

(84) Benannte Vertragsstaaten:
**DE FR IT**

(30) Priorität: **10.03.2004 DE 102004012039**

(43) Veröffentlichungstag der Anmeldung:
**06.12.2006 Patentblatt 2006/49**

(73) Patentinhaber: **Astrium GmbH**
**81663 München (DE)**

(72) Erfinder: **TRAUTENBERG, Hans, Ludwig**
**85521 Ottobrun (DE)**

(74) Vertreter: **Hummel, Adam**
**EADS Deutschland GmbH**
**Patentabteilung**
**81663 München (DE)**

(56) Entgegenhaltungen:
- **HOLLREISER M ET AL: "Galileo User Segment Overview" PROCEEDINGS OF THE INSTITUTE OF NAVIGATION (ION) GPS, 9. September 2003 (2003-09-09), Seiten 1914-1928, XP002316875**
- **T. ZINK ET AL: "Analyses of Integrity Monitoring Techniques for a Global Navigation Satellite System" PROCEEDINGS OF THE IAIN WORLD CONGRESS IN ASSOCIATION WITH THE US ION ANNUAL MEETING, 28. Juni 2000 (2000-06-28), Seiten 117-127, XP002343913**
- **MEDEL C H ET AL: "SISA Computation Algorithms and their applicability for Galileo Integrity" PROCEEDINGS OF THE INSTITUTE OF NAVIGATION (ION) GPS, 24. September 2002 (2002-09-24), Seiten 2173-2184, XP002316876**
- **LEE Y C ED - INSTITUTE OF ELECTRICAL AND ELECTRONICS ENGINEERS: "RECEIVER AUTONOMOUS INTEGRITY MONITORING (RAIM) CAPABILTY FOR SOLE-MEANS GPS NAVIGATION IN THE OCEANIC PHASE OF FLIGHT" 500 YEARS AFTER COLUMBUS - NAVIGATION CHALLENGES OF TOMORROW. MONTEREY, CA., MAR. 23 - 27, 1992, PROCEEDINGS OF THE POSITION LOCATION AND NAVIGATION SYMPOSIUM (PLANS), NEW YORK, IEEE, US, Januar 1992 (1992-01), Seiten 464-472, XP000344339 ISBN: 0-7803-0468-3**

EP 1 728 092 B1

**Beschreibung**

Die Erfindung betrifft ein erstes Verfahren zum Bestimmen des Integritätsrisikos bei der Verwendung von Satellitensignalen, die jeweils von einem Satelliten stammen, ein zweites Verfahren zur Ermittlung von für die Bestimmung des Integritätsrisikos gemäß dem ersten Verfahren erforderlichen Informationen, sowie entsprechende Vorrichtungen zur Durchführung der Verfahren.

Satelliten-Referenziersysteme, wie beispielsweise das GPS (Global Positioning System) und das im Aufbau befindliche Galileo-System weisen ein eine Mehrzahl von Satelliten umfassendes Satelliten-System, ein mit einer zentralen Berechnungs-Station verbundenes erdfestes Empfangseinrichtungs-System sowie die Nutzungs-Systeme auf, welche die von den Satelliten übermittelten Satellitensignale auswerten und nutzen.

Ein Nutzungs-System satellitengestützter Zeit- und/oder Positionsdaten kann je nach Anwendungsfall zur Implementierung z.B. in ein Fahrzeug oder eine z.B. Boden-gestützte Zeit-Synchronisations-Einrichtung vorgesehen sein.

Die Genauigkeit oder Zuverlässigkeit der einem Nutzungs-System zur Verfügung stehenden Satellitendaten kann von allerhöchstem Interesse sein. In diesem Zusammenhang wird auf die Verwendung derartiger Nutzungs-Systeme beispielsweise in der Luftfahrt hingewiesen, bei der Landeanflüge praktisch bis zum Boden auf der Grundlage von durch Nutzungs-Systeme bereitgestellten Positions- und/oder Navigationsdaten durchgeführt werden. Die Konsequenzen von Fehlern in der Zuverlässigkeit des Gesamtsystems können dramatisch sein.

Ein erster Schritt zur Erhöhung der Zuverlässigkeit ist das Kontinuierliche Überwachen der einzelnen Satellitensignale dahingehend, ob sie fehlerfrei oder fehlerhaft sind. In der Praxis erfolgt das durch das erdfeste Empfangseinrichtungs-System bzw. die zentrale Berechnungs-Station. Dabei wird möglichst zeitnah überprüft, ob die einzelnen Satellitensignale über oder unter einem vorgegebenen Schwellenwert liegen oder nicht. Eine "Integrity Flag", die beispielsweise die Werte "ok", "nicht ok" oder "not monitored" annehmen kann, wird dann für jeden einzelnen Satelliten gesetzt und von einem oder mehreren Satelliten zu den Nutzungs-Systemen übertragen. Die Nutzungssysteme verwenden dann nur noch diejenigen Satellitensignale, deren Integrity Flag auf "ok" gesetzt ist.

Das wird aber noch nicht als ausreichend angesehen und es werden Anstrengungen unternommen, die Genauigkeit und die Zuverlässigkeit zusätzlich noch nutzerseitig zu bestimmen, um für die aktuelle Situation bestimmen zu können, ob die bestimmten Positionsdaten die Anforderungen erfüllen. Als Messgröße für die unscharfen Begriffe Genauigkeit und Zuverlässigkeit wird im Zusammenhang mit einem Satelliten-gestützten System die "Integrität" herangezogen.

Es sind Systeme zur Bestimmung der Integrität von Positionsdaten, die von Satelliten-Signalen hergeleitet sind, bekannt. Dabei wird davon ausgegangen, dass alle Satellitensignale, die von dem erdfesten Empfangseinrichtungs-System bzw. der zentrale Berechnungs-Station als nicht fehlerhaft erkannt sind, nach Anwendung der von einem optionalen Bodensystem bereitgestellten Korrekturen zu den Satellitendaten, jeweils durch eine Fehlerverteilung beschrieben werden können, die jeweils als Erwartungswert "Null" hat und durch eine Standardabweichung beschrieben werden kann.

Aus der EP 04 022 307.5 ist ein System bekannt, bei dem davon ausgegangen wird, dass es eine Vielzahl von Satellitensignalen gibt, für die diese Annahme zutrifft, dass es aber für jedes Nutzungs-System ein Satellitensignal mit den assoziierten Daten gibt, für welches diese Annahme nicht zutrifft, d.h das einen Fehler hat, der zwar unter dem Schwellenwert liegt, aber dennoch die Integrität der Positionsdaten beeinflusst. Für dieses Satellitensignal und die assoziierten Daten wird nun angenommen, dass der Erwartungswert der Fehlerverteilung, der für diesen Satelliten angenommene und von dem erdfesten Empfangseinrichtungs-System verbreitete Schwellenwert ist, und die Varianz des Fehlers die vom Empfangseinrichtungs-System verbreitete Varianz der Fehler-Schätzung ist.

In einem Satelliten-gestützten System für die Positionsbestimmung in Bezug zur Erde (im folgenden auch kurz als Satellitennavigationssystem bezeichnet) ist lokale und globale Integrität erforderlich, um eine möglichst exakte Positionsbestimmung zu erhalten. Unter Integrität wird bei einem Satellitennavigationssystem wie dem zukünftigen europäischen Satellitennavigationssystem Galileo einerseits die Fähigkeit des Systems verstanden, einen Nutzer der Positionsbestimmung innerhalb einer bestimmten Zeit zu warnen, wenn Teile des Navigationssystems nicht für seine konzipierten Anwendungen verwendet werden sollen; andererseits fällt unter Integrität auch das Vertrauen, das der Nutzer in die Zuverlässigkeit der vom Navigationssystem gelieferten Information setzen kann, insbesondere in deren Genauigkeit.

Warnungen können insbesondere dann notwendig werden, wenn einzelne Navigationssignale von Satelliten mit Fehlern behaftet sind. Solche Fehler entstehen beispielsweise, wenn ein Navigationssignal zur falschen Zeit (Uhrenbzw. Uhrenkorrekturfehler) oder am falschen Ort (fehlerhafte Satellitenbahndaten) erzeugt wird. Diese Fehler wirken sich daher auf die scheinbare Lauflänge des Signals vom Satelliten zum Empfänger aus. Zeitliche Fehler können hier auch in Form der ihnen äquivalenten Streckenfehler betrachtet werden. Derartige Fehler werden auch als Signal in Space Error oder kurz SISE bezeichnet.

Die Bezeichnung Signal in Space entstammt der Aufgabe eines Satellitennavigationssystems, das Informationen via Signale im Raum verteilt, um eine Positionsbestimmung zu ermöglichen. Im Galileo-System strahlt jeder Satellit vier Ranging Signale ab, die abhängig vom jeweiligen Signal und Dienst Ephemeriden, Uhrenparameter, Integritätsinformationen und andere Daten enthalten.

Zentrale Parameter zur Beschreibung und Festlegung der Integritätsanforderungen einer bestimmen Anwendung oder Operation in einem Satellitennavigationssystem sind Alarmlimit (AL), Alarmzeit (TTA) und Integritätsrisiko. Genaue Definitionen dieser Begriff folgen weiter unten.

Beim Galileo-System ist vorgesehen, dass von einer "Processing Facility", i.e. der zentralen Berechnungs-Station, neben der Bestimmung der Orbitdaten und der Uhrensynchronisation auch eine Vorhersage über die Genauigkeit der Navigationssignale vorgenommen wird. Diese Vorhersage deckt für den Fall des vorhersagbaren nominellen Verhaltens des Systems die Erzeugung des Navigationssignals bis zum Verlassen des Phasenzentrums der Satellitenantenne ab. Die Vorhersage der Genauigkeit wird als "Signal-In-Space Accuracy" (SISA) bezeichnet. Gleichzeitig wird mit dem sog. a-priori-$\rho_{check}$ ( auch als a-priority-SISMA - für Signal in Space Monitoring Accuracy - bezeichnet) die Genauigkeit vorhergesagt, mit der Fehler der Ranginginformation der Navigationssignale aus einem Monitoring Netzwerk geschätzt werden können. Dabei werden nur die Fehleranteile berücksichtigt, die bis zum Zeitpunkt des Verlassens des Phasenzentrums der Satellitenantenne dem Navigationssignal aufgeprägt wurden.

Durch Beobachtungen des Monitoring-Netzwerkes, bestehend aus 30 Monitoring Stationen (GSS) auf genau bekannten Positionen, werden die tatsächlichen Fehler (SISE) der einzelnen Navigationssignale beim Verlassen des Phasenzentrums der Satellitenantennen geschätzt. Zudem wird die wahre Genauigkeit, mit der diese Schätzung durchgeführt wird, berechnet (a-posteriori-Pcheck bzw. a-posteriory-SISMA).

Wenn die in einer Navigationsnachricht verbreitete vorhergesagte Genauigkeit der Fehlerbestimmung (a-priori-$\rho_{check}$) beim Schätzprozeß nicht eingehalten werden kann, d.h. a-priori-$\rho_{check}$ < posteriori-$\rho_{check}$ oder der SISE für das Navigationssignal eines Satelliten einen bestimmten Schwellwert überschreitet, sendet das System einen Alarm an die Nutzer des fehlerbehafteten Satelliten. Der Schwellwert wird dabei möglichst klein gewählt, aber immer noch so groß, dass eine vorgegebene Fehlalarmrate überschritten wird (Verfügbarkeit von Integrität) und gleichzeitig größere Fehler sicher festgestellt werden können. Der Schwellwert beinhaltet alle Fehler, die bis zum Verlassen des Phasenzentrums der Satellitenantenne dem Signal aufgeprägt werden.

Der Benutzer erhält die für die Integritätsbestimmung relevanten Daten über verschiedene Teile der Navigationsnachricht, die in den Satellitensignalen enthalten sind. SISA wird wie die Uhrparameter und Ephemeriden eines Satelliten alle 100 Minuten aktualisiert, da das Verhalten des SISA vor allem von der Vorhersagbarkeit der Uhrparameter dominiert wird. Dabei ist die durchschnittliche Beobachtbarkeit der aktiven Satellitenuhr in den letzten 100 Minuten entscheidend. Der a-priori-$\rho_{check}$ -Wert ist eine Vorhersage für die Genauigkeit, mit der der SISE Wert geschätzt werden kann. Er hängt von der geometrischen Beobachtbarkeit des Satelliten in jeder einzelnen Epoche ab und kann sich daher schnell ändern. Er wird alle 30 Sekunden aktualisiert. Im gleichen Zeitintervall erhält der Nutzer Informationen über den aktuellen Integritätsstatus aller Satelliten über eine Integritätstabelle. Sie enthält für jeden Satelliten eine Statusangabe, den bereits erwähnten "Integrity-Flag" (IF), der die Werte "ok", "not ok" oder "not monitored" annehmen kann. Ein Integritäts-Alarm kann letztendlich in jeder Sekunde erfolgen. Ein Alarm setzt den IF für den jeweiligen Satelliten von "ok" auf "not ok" bzw. "not monitored".

Aus den Werten SISA und a-priori-$\rho_{check}$ läßt sich für den Benutzer der Schwellwert, den das System für die Integritätsentscheidung benutzt, berechnen. Mit der Information aus den Werten des Schwellwertes und des IF für einen Satelliten kann ein Nutzer schließlich entscheiden, ob er seine Positionsbestimmung mit oder ohne Einbeziehung dieses Satelliten durchführen soll. Er darf nur Signale von Satelliten verwenden, deren IF auf "ok" gesetzt sind; zudem wird er nur Signale verwenden, deren Schwellwerte es erlauben, seine Anforderungen zu erfüllen.

Es folgen einige für das Verständnis wichtige Definitionen von Begriffen, die für ein Satellitennavigationssystem von Bedeutung sind:

*Integrity Risk*

Unter einem Integritätsrisiko versteht man die Wahrscheinlichkeit, dass ein berechneter Positionsfehler während einer beliebigen, durchgehenden Periode von 150 s einen bestimmten Schwellwert, das sog. Alarm Limit, übersteigt und der Nutzer nicht innerhalb einer bestimmten Zeitspanne, der sogenannten Time to Alarm, informiert wird.

*AL - Alarm limit, Alert limit*

Maximal zugelassener, durch Integritätsverletzung hervorgerufener, Lage-(horizontales Alarmlimit - HAL) bzw. Höhenfehler (vertikales Alarmlimit - VAL) in der Satelliten-gestützten Positionsbestimmung, bei dessen Überschreiten ein Integritätsalarm ausgelöst werden muss. Die Werte für HAL und VAL werden durch die Anforderungen der jeweiligen Anwendung festgelegt und stellen den maximal tolerierbaren ungemeldeten Fehler dar, der eine Durchführung der geplanten Operation, z.B. einer Positionsbestimmung, nicht gefährdet.

*TTA - Time to Alarm*

Time to Alarm ist die maximal zulässige Zeitspanne zwischen dem Auftreten einer Alarmbedingung und dem Eintreffen der Warnung bei einem Nutzer. Die maximal zulässige TTA ist anwendungsabhängig.

*PL - Protection Level*

Der Protection Level wird durch den Nutzer bestimmt und ist der Wert, der die Vertrauensgrenze der Fehler des Navigationssystems mittels Daten schätzt, die durch ein Bodensegment des Navigationssystems via Satellitensignal verbreitet werden.

*MP - Missed Protection*

Missed Protection ist die Wahrscheinlichkeit, dass der Positionsfehler größer ist als das Alert Limit, obwohl unter der Annahme einer nominalen Ausbreitung der Signale keines der bei der Positionslösung verwendeten Signale einen Integritätsalarm aufweist.

*FA - False Alarm*

Ein sogenannter False Alarm, also ein fälschlicherweise ausgelöster Alarm, tritt immer dann auf, wenn der geschätzte SISE (Signal In Space Error) größer ist als ein festgelegter Schwellwert und der tatsächliche SISE kleiner ist als der festgelegte Schwellwert.

*SISA - Signal In Space Accuracy*

Vorhersage der minimalen Standardabweichung einer Gauß-Verteilung, welche die Verteilungen des SISE aller möglichen Nutzerpositionen im Sichtbarkeitsbereich des Satelliten für den Fall, dass keine systematischen Fehler auftreten, einschließt ("bounded").
*"Bounden"* wird in diesem Fall folgendermaßen definiert: eine Verteilung einer Zufallsvariablen A wird von einer Verteilung einer Zufallsvariablen B ge-"bounded", wenn die Summe der Wahrscheinlichkeiten für A<-L und für A>+L kleiner ist als die Summe der Wahrscheinlichkeiten für B<-L und für B>+L, für alle L#0.

*SISE - Signal In Space Error*

SISE ist die maximale Auswirkung auf die Entfernung zwischen Satellit und Nutzer, den der Fehler verursacht, den das Signal beim Verlassen des Phasenzentrums der Satellitenantenne besitzt.

*MD - Missed Detection*

Eine sog. Missed Detection, also ein nicht entdeckter tatsächlicher Fehler, tritt immer dann ein, wenn der geschätzte SISE kleiner als ein festgelegter Schwellwert und der wahre SISE größer als dieser Schwellwert ist.

*IF - Integrity-Flag*

Die Integrity Flag eines Satelliten wird immer dann auf Alarm gesetzt, wenn der maximale Fehler der Entfernung zwischen Satellit und Nutzer einen vordefinierten Schwellwert übersteigt. Mögliche Werte des IF sind: "ok", "not ok" (= Alarm) und "not monitored".

*C - Continuity*

Die Kontinuität ist die Wahrscheinlichkeit, dass ein System ein spezifiziertes Maß an Genauigkeit und Integrität während einer Aktion mit bestimmter Dauer zur Verfügung stellt, vorausgesetzt das es zu Beginn der Aktion verfügbar ist.
Der für das Setzen des IF maßgebliche Schwellwert ist üblicherweise auf den minimalen Wert eingestellt, der für eine vorgegebene FA-Rate des IF-Algorithmus tolerierbar ist. Diese Einstellung basiert auf der Annahme, dass ein einzelner Satellit ausfällt bzw. ein einziges Satellitensignal fehlerhaft ist. Ausfälle mehrerer Satelliten oder mehrere fehlerhafte Satellitensignale werden hierbei nicht betrachtet.
Aufgabe der vorliegenden Erfindung ist es nun, ein Verfahren und eine Vorrichtung zum Verarbeiten von Satellitensignalen vorzuschlagen, mittels denen eine genauere Bestimmung des Integritätsrisikos möglich ist.

Diese Aufgabe wird durch ein Verfahren gemäß Anspruch 1, ein Verfahren gemäß Anspruch 7 sowie entsprechende Vorrichtungen gemäß den Ansprüchen 9, 11, 15 und 16 gelöst. Bevorzugte Ausgestaltungen der Erfindung ergeben sich aus den abhängigen Ansprüchen.

In den Ansprüchen ist auf spezielle definierte Größen, wie SISA, SISMA, ESISE, etc., Bezug genommen, wenn von einem "charakteristischen Wert für die Vorhersage der Orts- und Zeitungenauigkeit des Abstrahlereignisses des Satellitensignals", einem "charakteristischem Wert für die aus Satellitensignalen bzw Satelliteninformation bestimmte Genauigkeit in der Orts- und Zeitungenauigkeit des Abstrahlereignisses" bzw. der "Abschätzung der Orts- und Zeitungenauigkeit des Abstrahlereignisses aus der Satelliteninformation" die Rede ist. Das bedeutet nicht, dass die generellen Begriffe, wie sie in den Ansprüchen verwendet sind, lediglich diese speziellen Größen bezeichnen. Vielmehr dienen diese speziellen Größen lediglich der Veranschaulichung und sind aus der Sicht des Erfinders in der Umgebung des Galileo-Systems die bevorzugten Werte.

Das Verfahren gemäß Anspruch 1 betrifft die nutzersystemseitige Ermittlung des Integritätsrisikos, die typisch in dem Nutzungs-System durchgeführt wird. Hier steht eine Abschätzung für die Orts- und Zeitungenauigkeit des Abstrahlereignisses des Satellitensignals, z.B. der geschätzte Signal in Space Error ESISE (Estimated Signal in Space Error), regelmäßig nicht zur Verfügung, da seine Übermittlung zu viel Bandbreite benötigen würde. Um dennoch eine möglichst genaue Bestimmung des Integritätsrisikos vornehmen zukönnen, werden (Teil-)Integritätsrisiken für unterschiedliche Hypothesen ermittelt:

- "Nullte" Hypothese: keines der Satellitensignale ist fehlerhaft. Dann beschreibt, wie oben bereits erläutert, die jeweilige SISA (oder ein entsprechender Wert) die Fehlerverteilung dieses Satellitensignals, Das Integritätsrisiko wird auf der Basis der ungünstigsten Kombination dieser Fehlerverteilungen bestimmt.
- erste Hypothese: nur eines der Satellitensignale ist fehlerhaft. Dann beschreibt die jeweilige SISA die Fehlerverteilung der fehlerfreien Satellitensignale und der Schwellenwert für diesen Satelliten beschreibt dessen Fehler und SISMA die Fehlerverteilung um diesen. Wieder wird das Integritätsrisiko auf der Basis der ungünstigsten Kombination dieser Fehler bestimmt.
- zweite Hypothese: es sind gleichzeitig 2 der Satellitensignale fehlerhaft. Dann beschreibt die jeweilige SISA die Fehlerverteilung der fehlerfreien Satellitensignale und die jeweiligen Schwellenwerte für die Satelliten beschreibt deren Fehler und SISMA die Fehlerverteilung um diese. Das Integritätsrisiko wird auf der Basis der ungünstigsten Kombination dieser Fehler bestimmt.
- dritte, vierte, und weitere Hypothesen können entsprechend angeschlossen werden und die entsprechenden Integritätsrisiken bestimmt werden.

Das (Gesamt-)Integritätsrisiko kann bestimmt werden, indem man die aus der langfristigen Beobachtung der Satelliten bestimmbaren Wahrscheinlichkeiten für "kein Satellit aus n Satelliten fehlerhaft", "ein Satellit aus n Satelliten fehlerhaft", "2 Satelliten aus n Satelliten fehlerhaft", "3 Satelliten aus n Satelliten fehlerhaft", usw. heranzieht und die (Teil-)Integritätsrisiken miteinander kombiniert. Eine weiter Möglichkeit besteht darin, das höchste (Teil-)Integritätsrisiko zu bestimmen und dieses als das gültige (Gesamt-)Integritätsrisiko betrachtet.

Die Erfindung beruht im wesentlichen darauf, dass man die Wahrscheinlichkeit, dass mehrere Fehler gleichzeitig auftreten, stufenweise je nach Anzahl von gleichzeitig auftretenden Fehlern verringert. Wesentlich für die Erfindung ist insbesondere die Erkenntnis, dass es weniger wahrscheinlich ist, dass genau zwei Fehler gleichzeitig auftreten, als dass nur ein einzelner Fehler auftritt. Dementsprechend ist es auch weniger wahrscheinlich, dass genau drei Fehler gleichzeitig auftreten, als dass genau zwei Fehler auftreten, usw.

Die Erfindung betrifft nun ein Verfahren zum Verarbeiten von Satellitensignalen, bei dem bei einem Empfang der Satellitensignale ein erstes Integrity Flag IF eines ein erstes Satellitensignal aussendenden ersten Satelliten immer dann gesetzt wird, wenn der geschätzte Signal in Space Error SISE des ersten Satellitensignals größer ist als ein erster Schwellwert. Zusätzlich zum ersten Schwellwert wird mindestens ein zweiter Schwellwert benutzt, der kleiner ist als der erste Schwellwert, wobei für jeden zweiten ein zweites Satellitensignal aussendenden Satelliten jeweils ein Integrity Flag IF gesetzt wird, wenn das von diesem zweiten Satelliten ausgesendete Satellitensignal einen geschätzten Signal in Space Error SISE aufweist, der größer ist als der mindestens eine zweite Schwellwert.

Ein Schwellwert kann in einem Empfänger der Satellitensignale anhand von Standardabweichungen $\rho_{SISA}$ des Signal in Space Errors SISE und $\rho_{check}$ des geschätzten Signal in Space Errors SISE berechnet werden.

Die Standardabweichungen $\rho_{SISA}$ des Signal in Space Errors SISE und $\rho_{check}$ des geschätzten Signal in Space Errors SISE können mit jedem Satellitensignal übertragen werden.

Alternativ kann auch mit jedem Satellitensignal ein entsprechender Schwellwert übertragen werden.

Schließlich kann in einer weiteren alternativen Ausführungsform in einem Empfänger eine Tabelle mit Schwellwerten für verschiedene Kombinationen von Standardabweichungen $\rho_{SISA}$ des Signal in Space Errors SISE und $\rho_{check}$ des geschätzten des Signal in Space Errors SISE vorgesehen sein und beim Empfang eines oder mehrerer Satellitensignale ein entsprechender Schwellwert aus der Tabelle entnommen und für das Setzen von Integrity Flags IF verwendet werden.

Vorzugsweise wird jeder Schwellwert derart gewählt, dass vorgegebene Genauigkeitsanforderungen bezüglich der Satellitensignale und eine Fehlalarmrate eingehalten werden, wobei ein Fehlalarm auftritt, wenn der geschätzte Signal in Space Error SISE eines Satellitensignals größer ist als ein Schwellwert, der tatsächliche Space Error SISE des Satellitensignals jedoch kleiner.

Das erfindungsgemäße Verfahren wird vorzugsweise zur Satellitennavigation eingesetzt; ein Empfänger wertet dann mehrere Satellitensignale zur Positionsbestimmung aus, wobei er anhand der Integrity Flags IF ermitteln kann, welche der Satellitensignale ein für die Positionsbestimmung zu großen Signal in Space Error SISE aufweisen.

Es wird darauf hingewiesen, dass das Verfahren gemäß Anspruch 7 für sich selbst und insbesondere ohne oder nur mit einem Teil der Merkmale des Anspruchs 1 als erfinderisch angesehen wird. Dieses Verfahren betrifft die Ermittlung der für die vorangehend geschilderte Bestimmung des Integritätsrisikos benötigten Informationen insbesondere in der zentralen Berechnungsstation des satellitengestützen Referenzierungssystems. Der Berechnung dieser Informationen liegt der gleiche Grundgedanke wie der der Bestimmung des Integritätsrisikos zugrunde, dass nämlich neben der ersten Hypothese "ein Satellit ist fehlerhaft" auch mindestens eine weitere Hypothese "2 Satelliten sind gleichzeitig fehlerhaft" verfolgt wird. Die Schwellenwerte sowohl für die Bestimmung des Integritätsrisikos als auch für die Berechnung dieser Informationen können einander entsprechen, können mit den gleichen Algorithmen aus den gleichen Ausgangswerten berechnet werden oder können übertragen werden, damit eine separate Berechnung nicht erfolgen muss.

Die Erfindung betrifft ferner eine Vorrichtung, in der ein Algorithmus implementiert ist, der zum Ausführen mindestens eines der erfindungsgemäßen Verfahren ausgebildet ist. Hierzu kann die Vorrichtung entsprechende Rechen- und Speichermittel aufweisen, wie beispielsweise einen oder mehrere leistungsfähige Prozessoren und Speicherelemente zu Speichern des Algorithmus sowie von Rechenergebnissen.

Vorzugsweise ist die Vorrichtung als Satellitennavigationsgerät ausgebildet.

Die Erfindung betrifft auch ein Computer-Programm zum Verarbeiten von Satellitensignalen nach dem erfindungsgemäßen Verfahren.

Schließlich umfasst die Erfindung ein Computer-Programm-Produkt beinhaltend einen maschinenlesbaren Programmträger, auf dem ein Computer-Programm wie vorstehend in Form von elektronisch oder optisch lesbaren Steuersignalen gespeichert ist.

Eine weitere Ausführungsform der Erfindung betrifft ein Verfahren zum Verarbeiten von Satellitensignalen, bei dem bei einem Empfang der Satellitensignale ein erstes Integrity Flag IF eines ein erstes Satellitensignal aussendenden ersten Satelliten immer dann gesetzt wird, wenn der geschätzte Signal in Space Error SISE des ersten Satellitensignals grösser ist als ein erster Schwellwert, wobei zusätzlich zum ersten Schwellwert mindestens ein zweiter Schwellwert benutzt wird, der kleiner ist als die erste Schwellwert, wobei für jeden zweiten ein zweites Satellitensignal aussendenden Satelliten jeweils ein Integrity Flag IF gesetzt wird, wenn das von diesem zweiten Satelliten ausgesendete Satellitensignal einen geschätzten Signal in Space Error SISE aufweist, der grösser ist als der mindestens eine zweite Schwellwert.

Der Schwellwert kann in einem Empfänger der Satellitensignale anhand von Standardabweichungen $\rho_{SISA}$ des Signal in Space Errors SISE und $\rho_{check}$ des geschätzten Signal in Space Errors SISE berechnet werden.

Die Standardabweichungen $\rho_{SISA}$ des Signal in Space Errors SISE und $\rho_{check}$ des geschätzten Signal in Space Errors SISE können mit jedem Satellitensignal übertragen werden. Insbesondere kann mit jedem Satellitensignal ein entsprechender Schwellwert übertragen werden.

Es kann in einem Empfänger eine Tabelle mit Schwellwerten für verschiedene Kombinationen von Standardabweichungen $\rho_{SISA}$ des Signal in Space Errors SISE und $\rho_{check}$ des geschätzten des Signal in Space Errors SISE vorgesehen sein und beim Empfang eines oder mehrerer Satellitensignale ein entsprechender Schwellwert aus der Tabelle entnommen und für das Setzen von Integrity Flags IF verwendet werden.

Jeder Schwellwert kann derart gewählt werden, dass vorgegebene Genauigkeitsanforderungen bezüglich der Satellitensignale und eine Fehlalarmrate eingehalten werden, wobei ein Fehlalarm auftritt, wenn der geschätzte Signal in Space Error SISE eines Satellitensignals größer ist als ein Schwellwert, der tatsächliche Space Error SISE des Satellitensignals jedoch kleiner.

Das Verfahren kann zur Satellitennavigation eingesetzt werden und ein Empfänger kann mehrere Satellitensignale zur Positionsbestimmung auswerten, wobei er anhand der Integrity Flags IF ermitteln kann, welche der Satellitensignale ein für die Positionsbestimmung zu großen Signal in Space Error SISE aufweisen.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:

Fig. 1 eine schematische Darstellung eines satellitengestützten Referenzierungssystems;

Fig. 2 eine Veranschaulichung der bisherigen Schwellwertberechnung;

Fig. 3 ein Standford Diagramm;

Fig. 4 die theoretischen Wahrscheinlichkeiten für False Alarm, Alarm und Missed Detection mit $\rho_{SISA}$ = 0.65 m und $\rho_{check}$ = 0.30 m;

Fig. 5 die theoretischen Wahrscheinlichkeiten für False Alarm, Alarm und Missed Detection mit $\rho_{SISA}$ = 0.65 m und $\rho_{check}$ = 0.65 m;

Fig. 6 die theoretischen Wahrscheinlichkeiten für False Alarm, Alarm und Missed Detection mit $\rho_{SISA}$ = 0.95 m und $\rho_{check}$ = 0.30 m;

Fig. 7 eine Darstellung der Bereiche für Alarm und No Alarm;

Fig. 8 False Alarm Raten für unterschiedliche Schwellwerte mit der Annahme einer unterschiedlichen Anzahl von auftretenden Fehlern aus der Simulation für 27 Satelliten und 30 GSS; und

Fig. 9 die gesamte False Alarm Rate bei Berücksichtigung verschiedener False Alarm Raten der einzelnen Bedingungen mit unterschiedlichen Schwellwerten.

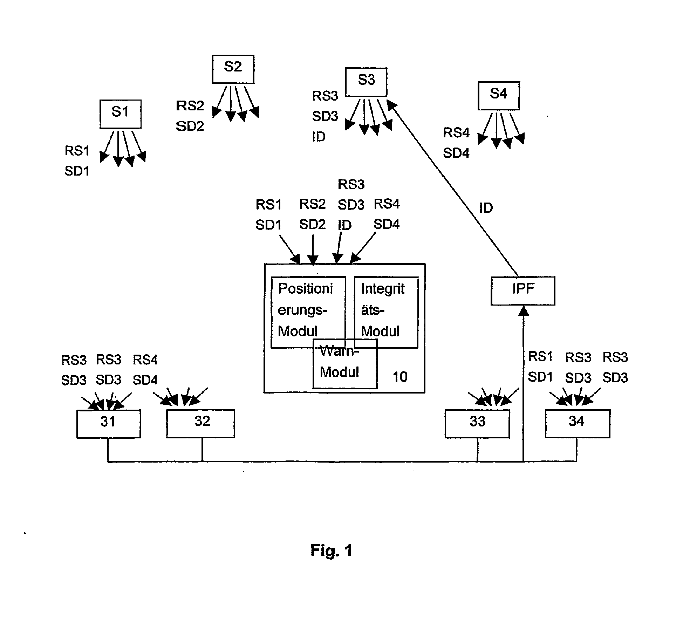

In der Figur 1 ist ein satellitengestütztes Referenzierungssystem gezeigt. Insbesondere erkennt man ein Satellitensystem mit vier Satelliten S1, S2, S3, S4, ein Nutzungs-System 10, eine zentrale Berechnungsstation PF ("processing facility") und vier Bodenstationen 31, 32, 33, 34, welche das erdfeste Empfangseinrichtungs-System bilden. Die Anzahl der verwendeten Satelliten S1, S2, S3, S4, von Nutzungssystemen 10, von Bodenstationen 31, 32, 33, 34 und/ oder zentralen Berechnungsstationen PF kann jeweils vom Anwendungsfall abhängig sein und kann für bestimmte Anwändungsfälle verschieden von der in Fig. 1 gezeigten Anzahl und insbesondere größer sein.

In der zentralen Berechnungsstation PF ist ein Integritätsdaten-Berechnungsmodul implementiert, in dem aus den Daten und Messungen der Bodenstationen 31, 32, 33, 34 Integritätsdaten bzw. Informationen zur Bestimmung des Integritätsrisikos ID berechnet werden. Diese Daten ID umfassen generell die Integrity Flag IF und SISMA und gegebenenfalls die Schwellenwerte TH. Diese Integritätsdaten ID werden über einen oder mehrere ausgewählte oder über alle Satelliten S1, S2, S3, S4 an das bzw. die Nutzungs-Systeme 10 übertragen. Ferner übertragen die Satelliten S1, S2, S3, S4 Satellitensignale RS1, RS2, RS3, RS4 ("Range Signal"), die generell zur Berechnung der Distanz zwischen Satellit und Nutzungs-System 10 herangezogen werden, und Satellitendaten SD1, SD2, SD3, SD4, die mit den Ephemeriden ein Modell des Orbits des entsprechenden Satelliten sowie ein Modell der Satellitenuhr beinhalten. Ein Nutzungs-System 10 "sieht" regelmäßig nur einen Teil der Satelliten S1, S2, S3, S4 des Satellitensystems.

In dem Nutzungs-System 10 ist ein Positionierungs-Modul zur Bestimmung von Positionsdaten und/oder von Zeitdaten in Bezug auf das Nutzungs-System 10 implementiert. Zudem ist in dem Nutzungs-System 10 ein Integritäts-Modul implementiert, mit dem auf der Basis der Integritätsdaten die Integrität oder das Integritätsrisiko der Positions- und/oder Zeitberechnung ermittelt werden kann. Weiterhin ist in dem Nutzungs-System 10 ein Warn- Modul implementiert, mit dem Warnungen generiert werden, sobald das Risiko, dass der Fehler der ermittelten Positions- und/oder Zeitdaten eine vorbestimmte Alarmschranke überschreitet, ein vorbestimmtes Integritätsrisiko überschreitet.

Die Bodenstationen 31, 32, 33, 34 empfangen die Satellitensignale RS1, RS2, ...; SD1, SD2, ...; und/oder ID und leiten diese Daten entweder weiter an die zentrale Berechnungsstation PF oder berechnen selbst dezentral daraus die relevanten Informationen unter anderem die Informationen, die zur Bestimmung des Integritätsrisikos verwendet werden.

Im Folgenden wird beispielhaft die Integrity Flag Schwellwert Berechnung zunächst anhand eines definierten Schwellwertes und anschließend anhand unterschiedlicher Schwellwerte gemäß der Erfindung erläutert.

Zunächst wird ein Konzept zur direkten analytischen Berechnung des Schwellwerts beschrieben. Der Integrity Flag Schwellwert dient als Grenze der Entscheidung, ob der IF eines Satelliten auf "ok" oder "not ok" gesetzt werden soll. Er muss dabei so gewählt werden, dass die Systemanforderungen eingehalten werden können. Dies sind zum einen die Genauigkeiten, beschrieben durch die Alert Limits, zum anderen die Größen Verfügbarkeit und Kontinuität.

Durch Simulationen wurde festgestellt, dass die Berechnung des Schwellwerts unter den gegebenen Anforderungen hauptsächlich von der Fehlalarmrate gesteuert wird, die eine Größe zur Beschreibung der Verfügbarkeit ist. Das heißt, man muss versuchen einen Schwellwert zu finden, der möglichst klein ist, um die Genauigkeitsanforderungen einzuhalten, aber gerade noch die erlaubte Fehlalarmrate einhält.

Ein Fehlalarm tritt dann auf, wenn der geschätzte SISE größer als der Schwellwert aber gleichzeitig der tatsächliche SISE kleiner als der Schwellwert ist.

Der Schwellwert hängt somit von der Verteilung des SISE, der Verteilung der SISE-Schätzung und der Fehlalarmrate ab.

Im folgenden wird nun die Wahrscheinlichkeitsverteilungen von SISE und SISE$_{geschätzt}$ hergeleitet. Die Verteilung des SISE wird als Normalverteilung mit Erwartungswert 0 und Standardabweichung $\rho_{SISA}$ (SISE~N(0,O$\rho_{SISA)}$)) angenommen. Die Schätzung des SISE besitzt eine Standardabweichung $\rho_{check}$ und soll ebenfalls mit dem Erwartungswert SISE (SISE$_{geschätzt}$~N(SISEO$\rho_{check}$) normalverteilt sein.

Die Wahrscheinlichkeitsdichten dieser Größen sehen damit folgendermaßen aus:

SISE:

$$p_x(x) = \frac{1}{\sqrt{2\pi}\,\sigma_{SISA}}e^{-\frac{1}{2}\left(\frac{x}{\sigma_{SISA}}\right)^2}$$

**Gleichung 0-1**

SISE$_{geschätzt}$:

$$p_y(y) = \frac{1}{\sqrt{2\pi}\,\sigma_{check}}e^{-\frac{1}{2}\left(\frac{y-SISE}{\sigma_{check}}\right)^2}$$

**Gleichung 0-2**

Will man die Dichte des geschätzten SISE in Abhängigkeit des tatsächlichen SISE ausdrücken, so erhält man folgende Wahrscheinlichkeitsdichte:

$$p_y(y) = \int_{-\infty}^{\infty} p_x(x) \cdot p_y(x,y)dx = \int_{-\infty}^{\infty} \frac{1}{\sqrt{2\pi}\,\sigma_{SISA}}e^{-\frac{1}{2}\left(\frac{x}{\sigma_{SISA}}\right)^2} \cdot \frac{1}{\sqrt{2\pi}\,\sigma_{check}}e^{-\frac{1}{2}\left(\frac{y-x}{\sigma_{check}}\right)^2}dx$$

$$= \frac{1}{\sqrt{2\pi} \cdot \sqrt{\sigma_{SISA}^2 + \sigma_{check}^2}}e^{-\frac{1}{2}\left(\frac{y}{\sqrt{\sigma_{SISA}^2 + \sigma_{check}^2}}\right)^2}$$

**Gleichung 0-3**

Es kann also angenommen werden, dass der geschätzte SISE ebenfalls normalverteilt ist mit Erwartungswert 0 und Standardabweichung $\sqrt{\sigma_{SISA}^2 + \sigma_{check}^2}$ (SISE$_{geschätzt}$~(0, $\sqrt{\sigma_{SISA}^2 + \sigma_{check}^2}$).

Die geforderte Fehlalarmrate ist für eine unabhängige Stichprobe maximal $1.5 \cdot 10^{-5}$. Es wird nun versucht einen Schwellwert so zu berechnen, dass er genau diesen Grenzwert für die Fehlalarmrate trifft.

Der bisherige Vorschlag zur Berechnung des Schwellwerts (TH) war folgender:

$$TH = k_{pfa} \cdot \sqrt{\sigma_{SISA}{}^2 + \sigma_{check}{}^2}$$

**Gleichung 0-4**

mit $k_{pfa}$ aus:

$$P_{FA} = 1.5 \cdot 10^{-5} = 2 \cdot \int_{k_{pfa}}^{\infty} \frac{1}{\sqrt{2\pi}} e^{-\frac{1}{2}x^2} dx$$

$$\Rightarrow k_{pfa} \approx 4.33$$

**Gleichung 0-5**

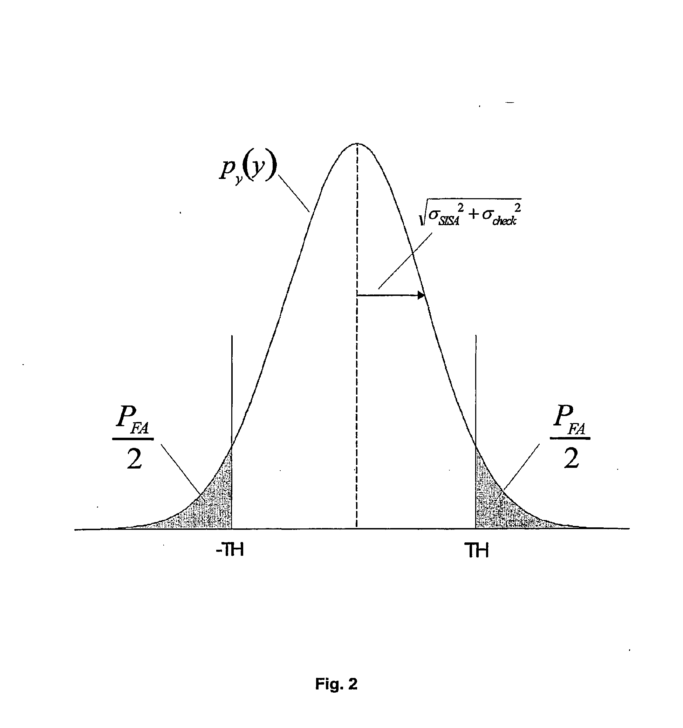

Aus Abbildung 2 erkannt man, dass der Schwellwert TH die Fläche unterhalb der Kurve für die Wahrscheinlichkeitsdichte $p_y(y)$ für den geschätzten SISE so begrenzt, dass

$$1 - \int_{-TH}^{TH} p_y(y)dy = P_{FA}$$

**Gleichung 0-6**

gilt.

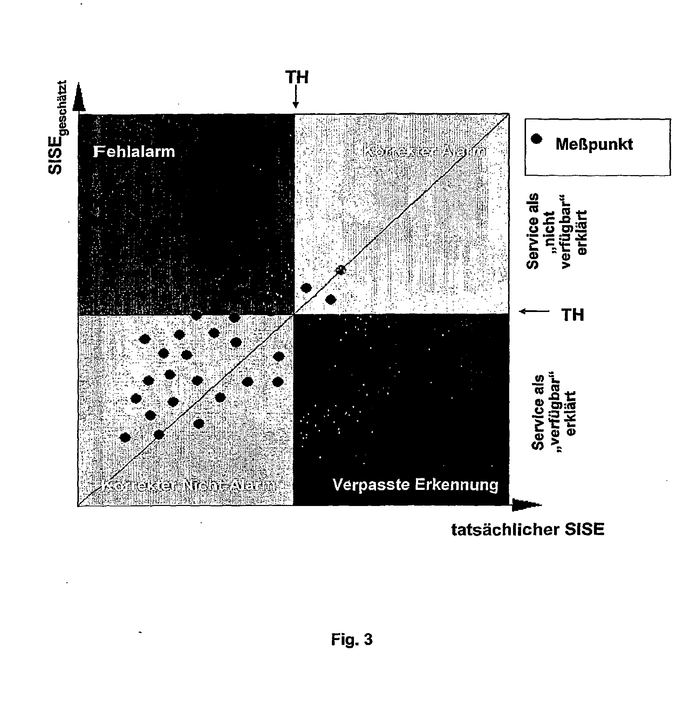

Fig.3 zeigt, wann die verschiedenen Zustände "False Alarm", "Correct Alarm", "Correct No Alarm" und "Missed Detection" eintreffen. Ob ein Alarm erzeugt wird, hängt dabei davon ab, ob $SISE_{geschätzt} > TH$ ist, ansonsten wird kein Alarm erzeugt.

Betrachtet man nun den Bereich für einen False Alarm, so erkennt man, dass dieser Fall genau dann eintritt, wenn der tatsächliche SISE kleiner als der Schwellwert und gleichzeitig der geschätzte SISE größer als der Schwellwert ist.

Die Wahrscheinlichkeit, dass der tatsächliche SISE kleiner als der Schwellwert ist, ist nach 0-1:

$$P(SISE < TH) = \int_{-TH}^{TH} p_x(x)dx = \int_{-TH}^{TH} \frac{1}{\sqrt{2\pi}\,\sigma_{SISA}} e^{-\frac{1}{2}\left(\frac{x}{\sigma_{SISA}}\right)^2} dx$$

**Gleichung 0-7**

Die Wahrscheinlichkeit, dass der geschätzte SISE größer ist als der Schwellwert, unter der Bedingung, dass der tatsächliche SISE kleiner als der Schwellwert ist, ist somit nach Gleichung 0.2 und Gleichung 0-7:

$$P\left(SISE_{gesch\ddot{a}tzt} > TH \mid SISE < TH\right) = \int_{-\infty}^{-TH}\left(\int_{-TH}^{TH}p_x(x)\cdot p_y(x,y)dx\right)dy + \int_{TH}^{\infty}\left(\int_{-TH}^{TH}p_x(x)\cdot p_y(x,y)dx\right)dy$$

$$= \int_{-\infty}^{\infty}\left(\int_{-TH}^{TH}p_x(x)\cdot p_y(x,y)dx\right)dy - \int_{-TH}^{TH}\left(\int_{-TH}^{TH}p_x(x)\cdot p_y(x,y)dx\right)dy - \int_{TH}^{\infty}\left(\int_{-TH}^{TH}p_x(x)\cdot p_y(x,y)dx\right)dy$$

$$+ \int_{TH}^{\infty}\left(\int_{-TH}^{TH}p_x(x)\cdot p_y(x,y)dx\right)dy$$

$$= \int_{-\infty}^{\infty}\left(\int_{-TH}^{TH}p_x(x)\cdot p_y(x,y)dx\right)dy - \int_{-TH}^{TH}\left(\int_{-TH}^{TH}p_x(x)\cdot p_y(x,y)dx\right)dy$$

**Gleichung 0-8**

Da $p_x(x)\cdot p_y(x,y)$ gleichmäßig konvergent ist, kann die Reihenfolge der Integration vertauscht werden. Es gilt also Folgendes:

$$\int_{-\infty}^{\infty}\left(\int_{-TH}^{TH}p_x(x)\cdot p_y(x,y)dx\right)dy = \int_{-\infty}^{\infty}\left(\int_{-TH}^{TH}\frac{1}{\sqrt{2\pi}\,\sigma_{SISA}}e^{-\frac{1}{2}\left(\frac{x}{\sigma_{SISA}}\right)^2}\cdot\frac{1}{\sqrt{2\pi}\,\sigma_{check}}e^{-\frac{1}{2}\left(\frac{y-x}{\sigma_{check}}\right)^2}dx\right)dy$$

$$= \int_{-TH}^{TH}\left(\int_{-\infty}^{\infty}\frac{1}{2\pi\sigma_{SISA}\sigma_{check}}e^{-\frac{1}{2}\left(\left(\frac{x}{\sigma_{SISA}}\right)^2+\left(\frac{y-x}{\sigma_{check}}\right)^2\right)}dy\right)dx = \int_{-TH}^{TH}\frac{1}{\sqrt{2\pi}\,\sigma_{SISA}}e^{-\frac{1}{2}\left(\frac{x}{\sigma_{SISA}}\right)^2}dx = \int_{-TH}^{TH}p_x(x)dx$$

**Gleichung 0-9**

Gleichung 0-8 vereinfacht sich damit zu:

$$P\left(SISE_{gesch\ddot{a}tzt} > TH \mid SISE < TH\right) = \int_{-TH}^{TH}p_x(x)dx - \int_{-TH}^{TH}\left(\int_{-TH}^{TH}p_x(x)\cdot p_y(x,y)dx\right)dy$$

$$= \underbrace{\int_{-TH}^{TH}\frac{1}{\sqrt{2\pi}\,\sigma_{SISA}}e^{-\frac{1}{2}\left(\frac{x}{\sigma_{SISA}}\right)^2}dx}_{Term1} - \underbrace{\int_{-TH}^{TH}\left(\int_{-TH}^{TH}\frac{1}{2\pi\sigma_{SISA}\sigma_{check}}e^{-\frac{1}{2}\left(\left(\frac{x}{\sigma_{SISA}}\right)^2+\left(\frac{y-x}{\sigma_{check}}\right)^2\right)}dx\right)dy}_{Term2}$$

**Gleichung 0-10**

Betrachtet man die einzelnen Terme in Gleichung 0-10 in Hinblick auf Fig. 3, so erkennt man, dass Term 1 der Wahrscheinlichkeit für den Fall, dass der tatsächliche Fehler kleiner als der Schwellwert ist, entspricht. Das heißt Term 1 entspricht der Wahrscheinlichkeit für "Correct No Alarm" und "False Alarm" zusammen. Term 2 dagegen entspricht der Wahrscheinlichkeit für den Fall, dass sowohl der tatsächliche als auch der geschätzte SISE kleiner als der Schwellwert ist, das heißt der Messwert wird dem Bereich "Correct No Alarm" zugeteilt. Somit wird die Wahrscheinlichkeit für einen Fehlalarm erhalten, indem wir von der Wahrscheinlichkeit, dass der tatsächliche Fehler kleiner als der Schwellwert ist, die Wahrscheinlichkeit, dass der Messwert im Bereich "Correct No Alarm" liegt, abziehen. Gleichung 0-11 beschreibt uns also die Wahrscheinlichkeit für einen Fehlalarm:

$$
\begin{aligned}
P_{FA} \;=\;& P\!\left(SISE_{geschätzt} > TH \mid SISE < TH\right) \\[2mm]
=\;& \int_{-TH}^{TH} \frac{1}{\sqrt{2\pi}\,\sigma_{SISA}}\, e^{-\frac{1}{2}\left(\frac{x}{\sigma_{SISA}}\right)^2} dx \;-\; \int_{-TH}^{TH}\left(\int_{-TH}^{TH} \frac{1}{2\pi\sigma_{SISA}\sigma_{check}}\, e^{-\frac{1}{2}\left(\left(\frac{x}{\sigma_{SISA}}\right)^2+\left(\frac{y-x}{\sigma_{check}}\right)^2\right)} dx\right) dy
\end{aligned}
$$

**Gleichung 0-11**

Betrachten wir zunächst einmal die Wahrscheinlichkeit dafür, dass der geschätzte SISE größer als der Schwellwert ist. Wir erhalten:

$$
\begin{aligned}
P\!\left(SISE_{geschätzt} > TH\right) \;=\;& \int_{-\infty}^{-TH} p_y(y)\,dy + \int_{TH}^{\infty} p_y(y)\,dy \\[2mm]
=\;& \int_{-\infty}^{\infty} p_y(y)\,dy - \int_{-TH}^{TH} p_y(y)\,dy - \int_{TH}^{\infty} p_y(y)\,dy + \int_{TH}^{\infty} p_y(y)\,dy \\[2mm]
=\;& \int_{-\infty}^{\infty} p_y(y)\,dy - \int_{-TH}^{TH} p_y(y)\,dy
\end{aligned}
$$

**Gleichung 0-12**

Da $p_y(y)$ aus wiederum eine Wahrscheinlichkeitsdichte ist, gilt:

$$
\int_{-\infty}^{\infty} p_y(y)\,dy = 1
$$

**Gleichung 0-13**

Gleichung 0-12 vereinfacht sich dadurch zu:

$$P\left(SISE_{geschätzt} > TH\right) = 1 - \int_{-TH}^{TH} p_y(y)\,dy$$

**Gleichung 0-14**

Gleichung 0-14 entspricht folglich Gleichung 0-6. Was dort als Wahrscheinlichkeit eines Fehlalarms bezeichnet wurde, ist tatsächlich jedoch die Wahrscheinlichkeit generell für einen Alarm. Mit dieser Wahrscheinlichkeit wird also die Summe der Wahrscheinlichkeiten für "False Alarm" und "Correct Alarm" ausgedrückt und nicht nur die Wahrscheinlichkeit für "False Alarm", wie eigentlich beabsichtigt.

Um die Wahrscheinlichkeit für einen Fehlalarm auszurechnen, muss also verwendet werden. Für eine gegebene Fehlalarmwahrscheinlichkeit muss daraus der Schwellwert berechnet werden.

Im Folgenden wird nun ein alternativer Ansatz über die Berechnung der Wahrscheinlichkeit für "Missed Detection" beschreiben. Analog zur Wahrscheinlichkeit für einen False Alarm lässt sich die Wahrscheinlichkeit für "Missed Detection" aus Fig. 3 und den Wahrscheinlichkeitsdichten aus berechnen. Man erhält dafür:

$$P\left(SISE_{geschätzt} < TH \mid SISE > TH\right) = P\left(SISE_{geschätzt} < TH\right) - P\left(SISE_{geschätzt} < TH \mid SISE < TH\right)$$

$$= \int_{-TH}^{TH}\left(\int_{-\infty}^{\infty} p_x(x)\cdot p_y(x,y)\,dx\right)dy - \int_{-TH}^{TH}\left(\int_{-TH}^{TH} p_x(x)\cdot p_y(x,y)\,dx\right)dy$$

$$= \int_{-TH}^{TH} \frac{1}{\sqrt{2\pi}\cdot\sqrt{\sigma_{SISA}^2 + \sigma_{check}^2}} e^{-\frac{1}{2}\left(\frac{y}{\sqrt{\sigma_{SISA}^2 + \sigma_{check}^2}}\right)^2} dy - \int_{-TH}^{TH}\left(\int_{-TH}^{TH} \frac{1}{2\pi\sigma_{SISA}\sigma_{check}} e^{-\frac{1}{2}\left(\left(\frac{x}{\sigma_{SISA}}\right)^2 + \left(\frac{y-x}{\sigma_{check}}\right)^2\right)} dx\right)d$$

$$= P_{MD}$$

**Gleichung 0-15**

Fordert man eine maximale Wahrscheinlichkeit für das Auftreten einer Missed Detection, so könnte der Schwellwert auch daran ausgerichtet werden.

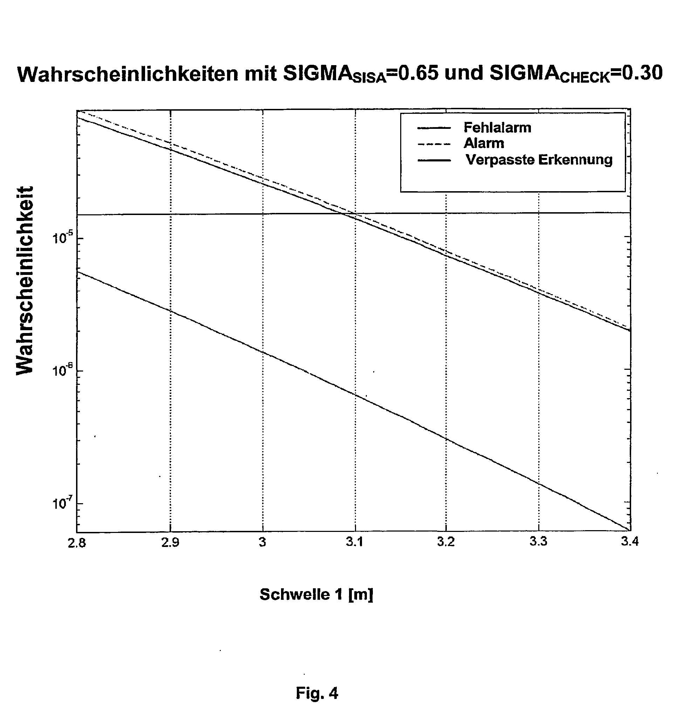

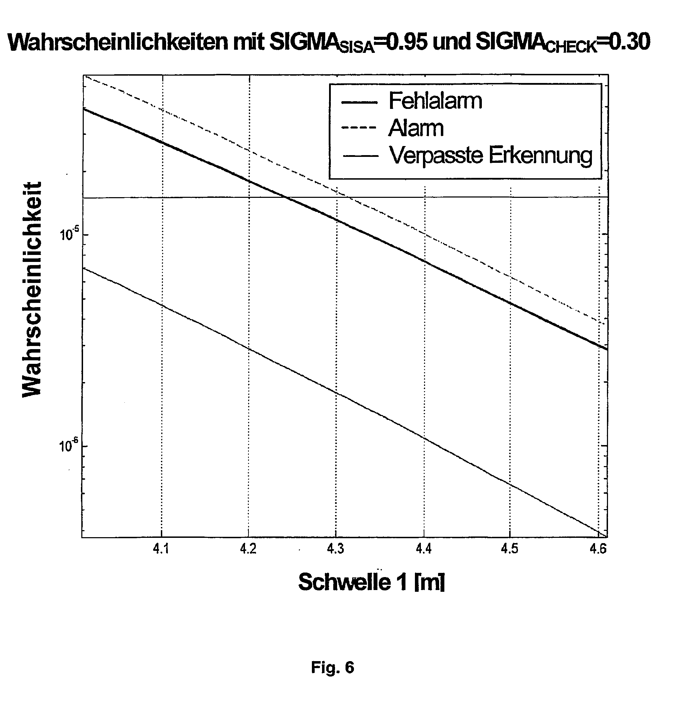

Die Fig. 4 bis 6 zeigen anhand von Beispielen für bestimmte $\rho_{SISA}$- und $\rho_{check}$-Werte jeweils die Wahrscheinlichkeiten für einen False Alarm nach Gleichung 0-11, für einen Alarm nach Gleichung O-14 und für eine Missed Detection nach Gleichung 0-15.

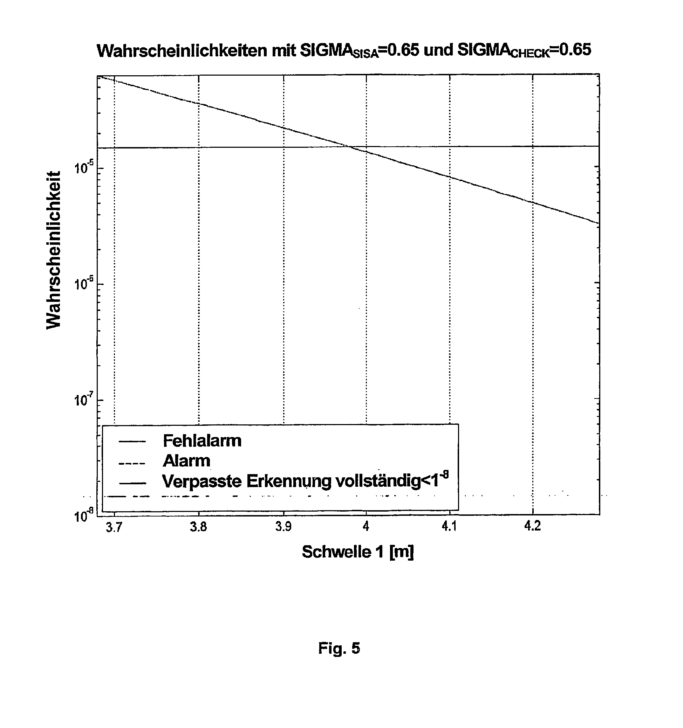

Es ist deutlich zu erkennen, dass der berechnete Schwellwert bei gleicher Wahrscheinlichkeit für False Alarm und Alarm unterschiedlich ist, wenn der $\rho_{check}$-Wert kleiner als der $\rho_{SISA}$-Wert ist. Wenn der $\rho_{check}$-Wert bei gleichbleibendem $\rho_{SISA}$-Wert größer gewählt wird, so wird der Unterschied der berechneten Schwellwerte bei gleichen Wahrscheinlichkeiten für False Alarm und Alarm immer kleiner. Fig. 5 zeigt praktisch keinen Unterschied mehr zwischen False Alarm und Alarm. Das bedeutet, wenn die Werte für $\rho_{SISA}$ und $\rho_{check}$ etwa gleich groß sind, so sind alle Alarme gleichzeitig auch False Alarms.

Ist der $\rho_{check}$-Wert jedoch deutlich kleiner als der $\rho_{SISA}$-Wert, so macht es einen erheblichen Unterschied, ob man den Schwellwert aus Gleichung 0-11 oder aus Gleichung 0-6, die eigentlich den allgemeinen Alarm beschreibt, erhält.

Nun wird die Theorie unterschiedlicher Schwellwerte gemäß der Erfindung erläutert. Es besteht generell das Problem, dass man die tatsächliche Verteilung des SISE nicht kennt und auch nicht überprüfen kann, solange man keinen Schwellwert hat, der entsprechend klein ist, um den $\square_{SISA}$ zu überprüfen. Im Folgenden werden Konzepte zur Schwellwertberechnung dargestellt.

**1. Analytische Berechnung unterschiedlicher Schwellwerte**

Die Reduzierung der Schwellwerte beruht darauf, dass man die Wahrscheinlichkeit, dass mehrere Fehler gleichzeitig auftreten, stufenweise je nach Anzahl von gleichzeitig auftretenden Fehlern verringert. Das heißt, es ist weniger wahrscheinlich, dass genau zwei Fehler gleichzeitig auftreten, als dass nur ein einzelner Fehler auftritt. Entsprechend ist es weniger wahrscheinlich, dass genau drei Fehler gleichzeitig auftreten, als dass genau zwei Fehler auftreten, usw.

### 1.1 Annahme mindestens eines Fehlers

Der False Alarm für genau einen angenommenen Fehler wird nach berechnet. Die Bedingung für einen False Alarm lautet in diesem Fall:

Der geschätzte SISE für einen Satelliten i muss größer sein als der Schwellwert, während gleichzeitig der tatsächliche SISE des Satelliten i kleiner als der Schwellwert ist. Dies führt zu folgender Gleichung:

$$P_{FA,i} = P\left(SISE_{geschätzt,i} > TH1 \mid SISE_i < TH1\right)$$
$$= \int_{-TH1}^{TH1} \frac{1}{\sqrt{2\pi}\sigma_{SISA,i}} e^{-\frac{1}{2}\left(\frac{x}{\sigma_{SISA,i}}\right)^2} dx - \int_{-TH1}^{TH1}\left(\int_{-TH1}^{TH1} \frac{1}{2\pi\sigma_{SISA,i}\sigma_{check,i}} e^{-\frac{1}{2}\left(\left(\frac{x}{\sigma_{SISA,i}}\right)^2 + \left(\frac{y-x}{\sigma_{check,i}}\right)^2\right)} dx\right) dy$$

## Gleichung 0-16

Für eine vorgegebene Wahrscheinlichkeit $P_{FA1,i}$ kann daraus der Schwellwert TH1 berechnet werden.

### 1.2 Annahme mindestens zweier Fehler

Bei der Annahme, dass mindestens zwei Satelliten fehlerhaft sind, muss zunächst einmal gelten, dass mindestens für zwei Satelliten der geschätzte SISE größer als der Schwellwert ist:

$$SISE_{geschätzt,i} > TH2 \ \wedge \ SISE_{geschätzt,j} > TH2$$

für mindestens ein $j \neq i$.

Ist für einen Satelliten i der geschätzte SISE größer als der Schwellwert, dann liegt ein False Alarm für einen Satelliten i genau dann vor, wenn der tatsächliche SISE für den Satelliten i kleiner als der Schwellwert ist oder wenn nicht mindestens für zwei Satelliten ein korrekter Alarm vorliegt. Wenn nur für einen Satelliten ein korrekter Alarm vorliegt, so ist die Bedingung, dass mindestens zwei Satelliten fehlerhaft sind, verletzt. Ein solcher Alarm muß also auch als Fehlalarm gewertet werden.

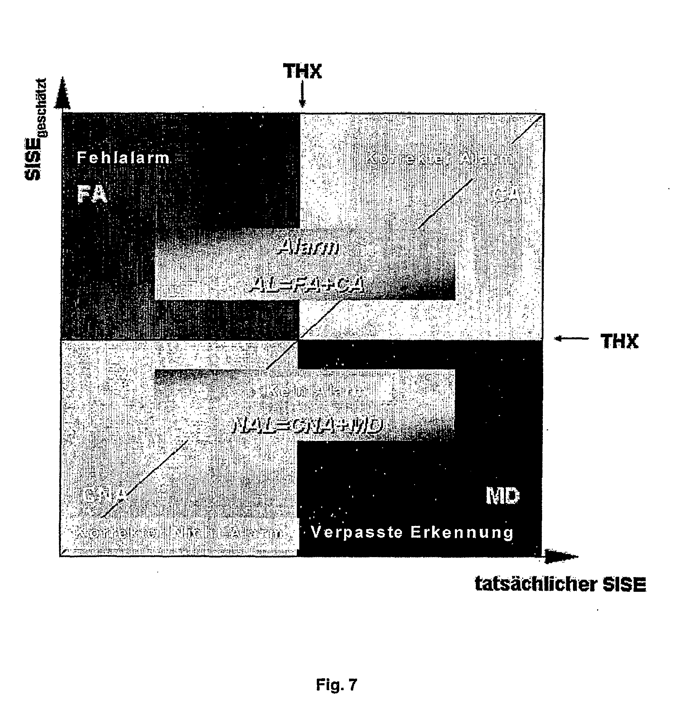

Benutzt man die Wahrscheinlichkeit P für die Bereiche wie sie in Fig. 7 dargestellt sind, so lässt sich für einen Satelliten i bei insgesamt n Satelliten die Wahrscheinlichkeit für einen False Alarm folgendermaßen darstellen:

$$P_{FA2,i} = \sum_{\substack{j=1 \\ j \neq i}}^{n} \left( P_{FA,i} \cdot \prod_{\substack{k=1 \\ k \neq i,j}}^{j-1} \left( P_{NAL,k} \right) \cdot P_{AL,j} \right) + P_{CA,i} \cdot \prod_{\substack{j=1 \\ j \neq i}}^{n} \left( 1 - P_{CA,j} \right)$$

**Gleichung 0-17**

mit

$$\begin{aligned}
P_{FA,\alpha} &= P\left( SISE_{geschätzt,\alpha} > TH2 \mid SISE_\alpha < TH2 \right) \\
&= \int_{-TH2}^{TH2} p_{x,\alpha}(x)\,dx - \int_{-TH2}^{TH2} \left( \int_{-TH2}^{TH2} p_{x,\alpha}(x) \cdot p_{y,\alpha}(x,y)\,dx \right) dy \\
&= \int_{-TH2}^{TH2} \frac{1}{\sqrt{2\pi}\,\sigma_{SISA,\alpha}} e^{-\frac{1}{2}\left( \frac{x}{\sigma_{SISA,\alpha}} \right)^2} dx - \int_{-TH2}^{TH2} \left( \int_{-TH2}^{TH2} \frac{1}{2\pi\sigma_{SISA,\alpha}\sigma_{check,\alpha}} e^{-\frac{1}{2}\left( \left( \frac{x}{\sigma_{SISA,\alpha}} \right)^2 + \left( \frac{y-x}{\sigma_{check,\alpha}} \right)^2 \right)} dx \right) dy
\end{aligned}$$

**Gleichung 0-18**

$$\begin{aligned}
P_{NAL,\beta} &= P\left( SISE_{geschätzt,\beta} < TH2 \right) \\
&= \int_{-TH2}^{TH2} \left( \int_{-\infty}^{\infty} p_{x,\beta}(x) \cdot p_{y,\beta}(x,y)\,dx \right) dy \\
&= \int_{-TH2}^{TH2} \frac{1}{\sqrt{2\pi} \cdot \sqrt{\sigma_{SISA,\beta}^2 + \sigma_{check,\beta}^2}} e^{-\frac{1}{2}\left( \frac{y}{\sqrt{\sigma_{SISA,\beta}^2 + \sigma_{check,\beta}^2}} \right)^2} dy
\end{aligned}$$

**Gleichung 0-19**

$$P_{AL,\gamma} = P(SISE_{gesch\ddot{a}tzt,\gamma} > TH2) = 1 - P(SISE_{gesch\ddot{a}tzt,\gamma} < TH2) = 1 - P_{NAL,\gamma}$$

$$= 1 - \int_{-TH2}^{TH2} \left( \int_{-\infty}^{\infty} p_{x,\gamma}(x) \cdot p_{y,\gamma}(x,y) dx \right) dy$$

$$= 1 - \int_{-TH2}^{TH2} \frac{1}{\sqrt{2\pi} \cdot \sqrt{\sigma_{SISA,\gamma}^2 + \sigma_{check,\gamma}^2}} e^{-\frac{1}{2}\left( \frac{y}{\sqrt{\sigma_{SISA,\gamma}^2 + \sigma_{check,\gamma}^2}} \right)^2} dy$$

**Gleichung 0-20**

$$P_{CA,\delta} = P(SISE_{gesch\ddot{a}tzt,\delta} > TH2 \mid SISE_{\delta} > TH2) = P_{AL,\delta} - P_{FA,\delta}$$

$$= 1 - \int_{-TH2}^{TH2} \left( \int_{-\infty}^{\infty} p_{x,\delta}(x) \cdot p_{y,\delta}(x,y) dx \right) dy - \left( \int_{-TH2}^{TH2} p_{x,\delta}(x) dx - \int_{-TH2}^{TH2} \left( \int_{-TH2}^{TH2} p_{x,\delta}(x) \cdot p_{y,\delta}(x,y) dx \right) dy \right)$$

$$= 1 - \int_{-TH2}^{TH2} \frac{1}{\sqrt{2\pi} \cdot \sqrt{\sigma_{SISA,\delta}^2 + \sigma_{check,\delta}^2}} e^{-\frac{1}{2}\left( \frac{y}{\sqrt{\sigma_{SISA,\delta}^2 + \sigma_{check,\delta}^2}} \right)^2} dy$$

$$- \int_{-TH2}^{TH2} \frac{1}{\sqrt{2\pi}\sigma_{SISA,\delta}} e^{-\frac{1}{2}\left( \frac{x}{\sigma_{SISA,\delta}} \right)^2} dx + \int_{-TH2}^{TH2} \left( \int_{-TH2}^{TH2} \frac{1}{2\pi\sigma_{SISA,\delta}\sigma_{check,\delta}} e^{-\frac{1}{2}\left( \left( \frac{x}{\sigma_{SISA,\delta}} \right)^2 + \left( \frac{y-x}{\sigma_{check,\delta}} \right)^2 \right)} dx \right) dy$$

**Gleichung 0-21**

### 1.3 Annahme von mindestens *m* Fehlern

Bei der Annahme, dass mindestens m Satelliten fehlerhaft sind, muss zunächst einmal gelten, dass mindestens für m Satelliten der geschätzte SISE größer als der Schwellwert ist:

$$SISE_{gesch\ddot{a}tzt,idx1} > THm \ \wedge \ SISE_{gesch\ddot{a}tzt,idx2} > THm \ \wedge \ \cdots \ \wedge \ SISE_{gesch\ddot{a}tzt,idxm} > THm$$

$$\text{mit } idx1 \neq idx2 \neq \cdots \neq idxm .$$

Ist für einen Satelliten i der geschätzte SISE größer als der Schwellwert, dann liegt ein False Alarm für einen Satelliten i genau dann vor, wenn der tatsächliche SISE für den Satelliten i kleiner als der Schwellwert ist oder wenn nicht mindestens für m Satelliten ein korrekter Alarm vorliegt. Wenn nur für höchstens m-1 Satelliten ein korrekter Alarm vorliegt, so ist die Bedingung, dass mindestens m Satelliten fehlerhaft sind, verletzt. Diese Alarmfälle müssen also auch als Fehlalarme gewertet werden.

Versucht man diesen Sachverhalt mathematisch auszudrücken, erhält man folgende Formel:

$$P_{FAmi} = P_{FAi} \cdot \sum_{i\_1}^{n-m+1}\left(\sum_{i\_2=i\_1+1}^{n-m+2}\left(\cdots\cdots\sum_{i\_(m-1)=i\_(m-2)+1}^{n-1}\left(\prod_{j=1}^{m-1}P_{ALi\_j}\cdot\prod_{k=1}^{i\_(m-1)}P_{NALk}\right)\right)\right)$$
$$+P_{CAi}\cdot\sum_{i\_1}^{m-1}\left(\sum_{i\_2=i\_1+1}^{m}\left(\cdots\cdots\sum_{i\_(n-m+1)=i\_(n-m)+1}^{n-1}\left(\prod_{j=1}^{n-m+1}\left(1-P_{CAi\_j}\right)\cdot\prod_{k=1}^{i\_(n-m+1)}P_{CAk}\right)\right)\right)$$

## Gleichung 0-22

Dabei sind die Indizes der Satelliten ungleich *i* durchlaufend nummeriert von *1* bis *n-1*. Die Wahrscheinlichkeiten $P_{FA,\alpha}$, $P_{NAL\beta}$, $P_{AL,\gamma}$ und $P_{CA,\delta}$ sind analog Gleichung 0-18 bis Gleichung 0-21, wenn man *TH2* durch *THm* ersetzt.

### 1.4 Berechnung der Schwellwerte

Oben wurde jeweils die analytische Berechnung für einen False Alarm angegeben, wenn man die Theorie unterschiedlicher Schwellwerte für unterschiedliche Annahmen für die Anzahl der Fehler berücksichtigt. Der Schwellwert selbst kann nur aus dieser Berechnung für eine vorgegebene False Alarm Rate abgeleitet werden. Eine direkte Berechnung des Schwellwerts ist nicht möglich, da der Schwellwert jeweils nur in den Integralgrenzen in bis vorkommt, wobei die Integrale teilweise auch nur numerisch lösbar sind. Der jeweilige Schwellwert müsste deshalb iterativ aus der Berechnung für den False Alarm berechnet werden. Diese Berechnung für alle unterschiedlichen Schwellwerte, je nach Annahme wie viele Fehler berücksichtigt werden, müsste dann für jede Messung durchgeführt werden. Betrachtet man und bedenkt die iterative Berechnung des Schwellwerts, so erkennt man, dass dies ein sehr aufwendiges Unterfangen darstellt.

### 2. Berechnung unterschiedlicher Schwellwerte aus Simulationen

Die Schätzung des SISE wurde bereits in Simulationen getestet. Nimmt man einen festen Schwellwert für alle berechneten Samples, so kann man die False Alarm Rate über alle verwendeten Samples berechnen. Verwendet man wieder die Annahme von unterschiedlichen Wahrscheinlichkeiten für unterschiedliche Anzahl von Fehlern, so gilt für einen False Alarm wiederum folgende Definition: Für die Annahme, dass m Satelliten fehlerhaft sind, wird für einen Satelliten i ein False Alarm ausgelöst, wenn

- die IFs von mindestens m Satelliten auf "not ok" gesetzt sind, darunter der IF für den Satellit i und

  o der tatsächliche SISE für den Satellit i kleiner als der Schwellwert ist oder
  o der tatsächliche SISE für höchstens m-1 Satelliten größer als der Schwellwert ist, darunter Satellit i.

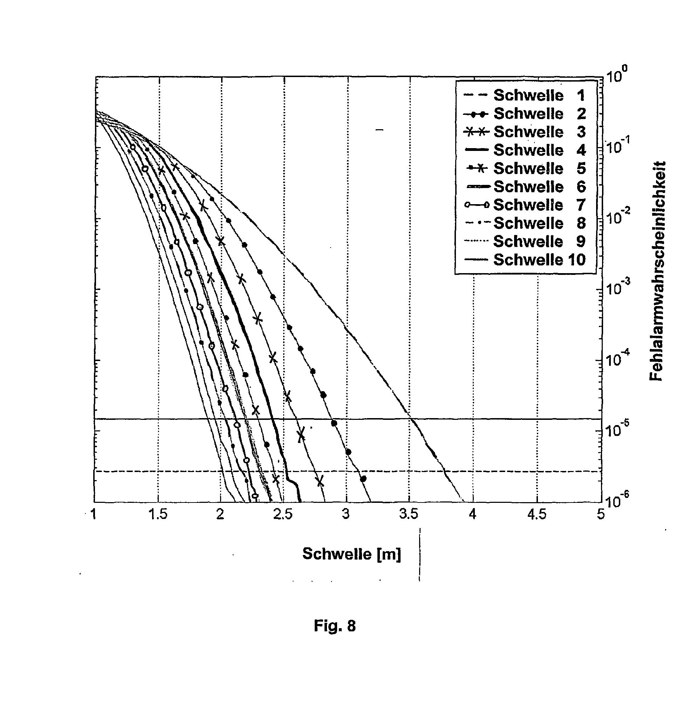

Für unterschiedliche Schwellwerte kann man damit die False Alarm Raten berechnen. Dies wurde für die Schätzung des SISE bei einer Konstellation von 27 Satelliten und 30 GSS durchgeführt. Das Ergebnis mit 10 unterschiedlichen Schwellwerten zeigt Fig. 8 in der die Wahrscheinlichkeiten für einen False Alarm gegenüber den Schwellwerten aufgetragen sind. Threshold X bezeichnet dabei jeweils die Kurve mit der dazugehörigen Annahme, dass genau X Satelliten fehlerhaft sind.

Man sieht deutlich, dass die Annahme, dass mehrere Fehler auftreten, bei der False Alarm Rate zur gewünschten Verkleinerung der Schwellwerte (Thresholds) führt. Liest man die Schwellwerte für eine bestimmte False Alarm Rate ab, so erhält man jedoch lediglich konstante Schwellwerte für alle Satelliten, unabhängig der jeweiligen $\rho_{SISA}$- und $\rho_{check}$-Werte. Es ist dadurch auch nicht mehr möglich die Schwellwerte für jede Epoche auszurechnen. Eine zeitliche Änderung der Schwellwerte ist höchstens für größere Zeiträume als Update denkbar.

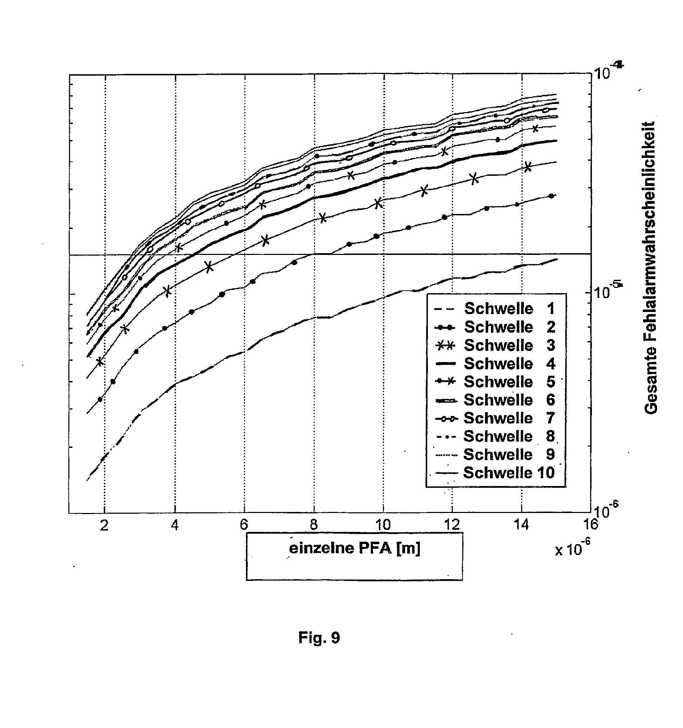

Die Kurven in Fig. 9 zeigen jedoch nur die False Alarm Raten für die jeweilige Bedingung, wie viele Fehler angenommen wurden. Wenn man wieder die False Alarm Rate insgesamt berechnen will, so muss man die Schwellwerte aus Fig. 9 abgreifen und wiederum den Datensatz betrachten, wann für einen Satelliten ein False Alarm auftritt. Die Raten der False Alarms werden in gewisser Weise aufaddiert. Man muss jedoch beachten, dass, wenn für einen Satelliten bereits für die Bedingung mit Schellwert 1 ein False Alarm besteht, er für die Bedingungen mit den weiteren Schwellwerten nicht mehrfach berücksichtigt wird. Fig. 9 zeigt die gesamte False Alarm Rate, wenn man aus Fig. 8 alle unterschiedlichen Schwellwerte für jeweils dieselbe Einzel-False Alarm Rate abgreift.

Man kann also ablesen, für welche Einzel-False-Alarm-Rate man die Schwellwerte abgreifen muss, um wieder auf den geforderten Wert der Wahrscheinlichkeit für einen False Alarm von maximal $1.5 \cdot 10^{-5}$ zu kommen.

Geht man in die Berechnung mit unterschiedlichen Schwellwerten mit der Annahme bis zu drei Fehlern pro Epoche, so müssen quasi die einzelnen Schwellwerte aus Fig. 9 für die Einzel-False-Alarm-Rate mit dem Wert $5.8 \cdot 10^{-6}$ abgegriffen werden. Geht man bis zu der Annahme von 10 gleichzeitigen Fehlern, so muss man die Einzel-False-Alarm-Rate bei dem Wert $2.7 \cdot 10^{-6}$ abgreifen.

Dies führt am Beispiel zu folgenden Schwellwerten:

| Schwellwert 1 | 3.78 m |
|---|---|
| Schwellwert 2 | 3.10 m |
| Schwellwert 3 | 2.75 m |
| Schwellwert 4 | 2.55 m |
| Schwellwert 5 | 2.43 m |
| Schwellwert 6 | 2.32 m |
| Schwellwert 7 | 2.23 m |
| Schwellwert 8 | 2.15 m |
| Schwellwert 9 | 2.08 m |
| Schwellwert 10 | 2.02 m |

Die obige Schwellwerttabelle wurde unter Berücksichtigung von 10 gleichzeitigen Fehlern bei einer Konstellation mit 27 Satelliten und 30 GSS erstellt.

Die Art der Schwellwertverbreitung, das heißt, wie der Nutzer die Schwellwertinformation erhält, wird im Folgenden für die unterschiedlichen Konzepte dargestellt.

### 3. Bisheriges Konzept

Nach dem bisherigen Konzept, bei dem davon ausgegangen wird, dass nur ein Satellit mit einem Fehler behaftet ist, soll der Schwellwert aus den Größen $\rho_{SISA}$ und $\rho_{check}$ nach folgender Gleichung berechnet werden:

$$TH_i = k_{pfa} \cdot \sqrt{\left( \alpha \cdot \sigma_{SISA,i} \right)^2 + \sigma_{check,i}^2}$$

### Gleichung 0-23

Durch die Übermittlung des $\rho_{SISA}$ und $\rho_{check}$ mit der Navigationsnachricht hat der Nutzer damit schon alle notwendigen Daten, um den jeweiligen Schwellwert zu ermitteln. Der Schwellwert muss also nicht zusätzlich über die Navigationsnachricht verteilt werden.

Oben wurde jedoch gezeigt, dass der Schwellwert nach falsch berechnet wird. Der Schwellwert muss daher aus der Gleichung 0-11 abgeleitet werden. Da der Schwellwert in Gleichung 0-11 in den Integrationsgrenzen vorkommt, kann diese Berechnung wiederum nur iterativ gelöst werden. Es wäre deshalb sinnvoll eine Tabelle zu erstellen, die für alle möglichen Kombinationen von PSISA und $\rho_{check}$, z.B. in cm-Intervallen, den Schwellwert wiedergibt.

Wenn diese Tabelle im Nutzerempfänger implementiert ist, benötigt man nur die jeweiligen $\rho_{SISA}$- und $\rho_{check}$-Werte, um den Schwellwert zu erhalten, ohne dass der Schwellwert zusätzlich über die Navigationsnachricht übermittelt werden muss.

**3.1 Konzept unterschiedlicher Schwellwerte aus analytischer Berechnung**

Bei der analytischen Berechnung der Schwellwerte werden auch bei der Theorie mit unterschiedlichen Schwellwerten lediglich die Werte $\rho_{SISA}$ und $\rho_{check}$ der Satelliten benötigt. Es ist aber darauf zu achten, dass die IPF (Integrity Processing Facility) dieselben Schwellwerte zur Berechnung der Integrity Flags verwendet, wie sie auch der Nutzer für die Berechnung seiner Protection Levels und seines Integritätsrisikos verwendet.

Da der Nutzer, im Gegensatz zum Bodennetzwerk, das die IPF mit Daten versorgt, nicht Signale von allen Satelliten gleichzeitig empfangen kann, ist die Berechnung, die der Nutzer nach der Theorie der unterschiedlichen Schwellwerte durchführen kann, nicht dieselbe, die die IPF durchführt.

Das liegt daran, dass für die Bedingung eines False Alarms bei der Annahme von mehreren fehlerhaften Satelliten beachtet werden muss, wie viele Satelliten auf Alarm gesetzt werden können. Da der Nutzer nur Signale aus einer Untermenge der Satelliten empfangen kann, kann die Berechnung beim Nutzer nicht mit der Berechnung in der IPF identisch sein.

Die unterschiedlichen Schwellwerte müssen somit für jeden Satelliten dem Nutzer über die Navigationsnachricht mitgeteilt werden. Geht man bis zur Annahme von 10 gleichzeitig fehlerhaften Satelliten, so sind das 10 Werte pro Satellit. Würde man die Werte in eine Schwellwerttabelle aller 27 Satelliten schreiben, wären das somit 270 Werte. Die Schwellwerttabelle müsste immer dann erneuert werden, wenn ein $\rho_{check}$-Wert erneuert wird.

**3.2 Konzept unterschiedlicher Schwellwerte aus Simulationen**

In diesem Fall stellen die Schwellwerte sozusagen ausgeglichene Werte für alle Satelliten dar. Eine direkte Abhängigkeit der sich zeitlich verändernden $\rho_{SISA}$- und $\rho_{check}$-Werte ist somit nicht mehr vorhanden. Die $\rho_{check}$-Werte spielen für die Berechnung der Schwellwerte sogar überhaupt keine Rolle mehr.

Nimmt man an, dass die Schwellwerte konstant bleiben, so könnte man auf die Verbreitung der Schwellwerte über die Navigationsnachricht verzichten. Es wäre dann ausreichend, wenn eine Schwellwerttabelle in den Empfängern implementiert ist. Geht man jedoch davon aus, dass man die Schwellwerttabelle von Zeit zu Zeit aktualisieren möchte, so müsste man eine Schwellwerttabelle über die Navigationsnachricht an den Nutzer senden. Diese Tabelle würde beim Beispiel mit der Annahme von bis zu 10 gleichzeitigen Fehlern insgesamt 10 Schwellwerte für alle Satelliten beinhalten.

Das Update der Schwellwerttabelle wäre ebenfalls weniger kritisch, da die Daten über längere Zeiträume nicht erneuert werden müssten.

**Patentansprüche**

**1.** Verfahren zum Bestimmen des Integritätsrisikos bei der Verwendung von Satellitensignalen (RS1, RS2, ..., RSn) eines Satellitengestützten Referenziersystems, die jeweils von einem Satelliten (S1, S2, ..., Sn) stammen, aufweisend die folgenden Schritte:

(a) Bereitstellen eines für die Vorhersage der Orts- und Zeitungenauigkeit des Abstrahlereignisses des Satellitensignals (RS1, RS2, ..., RSn) charakteristischen Werts (SISA1, SISA2, ... SISAn);

(b) Bereitstellen von Integritätsdaten (ID) für mindestens einen Teil der Satelliten (S1, S2, ..., Sn), aufweisend eine Integrity Flag (IF1, IF2, ..., IFn), die anzeigt, ob das entsprechende Satellitensignal "ok" oder "nicht ok" ist, und eines für die aus Satellitensignalen (RS1, RS2, ..., RSn) bestimmte Genauigkeit in der Orts- und Zeitungenauigkeit des Abstrahlereignisses charakteristischen Werts (SISMA1, SISMA2, ..., SISMAn);

(c) Bereitstellen von mindestens 2 Schwellenwerten (TH1-1, TH2-1, ...; TH1-2, TH2-2, ...), wobei ein erster Schwellenwert (TH1-1, ..., TH2-1, ... THn-1) für eine erste Hypothese Anwendung findet, die davon ausgeht, dass ein Satellit nicht "ok" ist, und ein zweiter kleinerer Schwellenwert (TH1-2, TH2-2, ..., THn-2) für eine zweite Hypothese Anwendung findet, die davon ausgeht, dass gleichzeitig zwei Satelliten "nicht ok" sind;

(d) Bestimmen eines nullten Integritätsrisikos für eine "nullte" Hypothese, die davon ausgeht, dass alle Satelliten, deren Integrity Flag auf "ok" stehen, fehlerfrei arbeiten, basierend auf dem für die Vorhersage der Orts- und Zeitungenauigkeit des Abstrahlereignisses des Satellitensignals (RS1, RS2, ..., RSn) charakteristischen Wert (SISA1, SISA2, ..., SISAn);

(e) Bestimmen eines ersten Integritätsrisikos für eine erste Hypothese, die davon ausgeht, dass einer der Satelliten, deren Integrity Flag auf "ok" steht, nicht fehlerfrei arbeitet, basierend auf dem für die aus Satellitensignalen (RS1, RS2, ..., RSn) bestimmte Genauigkeit in der Orts- und Zeitungenauigkeit des Abstrahlereignisses charakteristischen Werts (SISMA1, SISMA2, ..., SISMAn), dem für die Vorhersage der Orts- und Zeitungenauigkeit des Abstrahlereignisses des Satellitensignals (RS1, RS2, ..., RSn) charakteristischen Wert (SISA1, SISA2, ... SISAn) und dem ersten Schwellenwert (TH1-1, TH2-1, ...THn-1);

(f) Bestimmen eines zweiten Integitätsrisikos für eine zweite Hypothese, die davon ausgeht, dass gleichzeitig zwei der Satelliten, deren Integrity Flag auf "ok" steht, nicht fehlerfrei arbeiten, basierend auf dem für die aus Satellitensignalen (RS1, RS2, ..., RSn) bestimmte Genauigkeit in der Orts- und Zeitungenauigkeit des Abstrahlereignisses charakteristischen Werts (SISMA1, SISMA2, ..., SISMAn), dem für die Vorhersage der Orts- und Zeitungenauigkeit des Abstrahlereignisses des Satellitensignals (RS1, RS2, ..., RSn) charakteristischen Wert (SISA1, SISA2, ... SISAn) und dem zweiten Schwellenwert (TH1-2, TH2-2, ..., THn-2); und

(g) Ermitteln des Gesamt-Integritätsrisikos aus den in den Schritten (d) bis (f) bestimmten Integritätsrisiken.

**2.** Verfahren nach Anspruch 1, wobei der Schritt (c) das Berechnen von Schwellenwerten (TH1-1, TH2-1, ..., THn-1; TH1-2, TH2-2, ..., THn-2; TH1-n, TH2-n, ..., THn-n) aus einem für die Vorhersage der Orts- und Zeitungenauigkeit des Abstrahlereignisses des Satellitensignals (RS1, RS2, ..., RSn) charakteristischen Wert (SISA1, SISA2, ..., SISAn) und einem für die aus Satellitensignalen (RS1, RS2, ..., RSn) bestimmte Genauigkeit in der Orts- und Zeitungenauigkeit des Abstrahlereignisses charakteristischen Wert (SISMA1, SISMA2, ..., SISMAn) aufweist.

**3.** Verfahren nach Anspruch 2, wobei der Berechnungsalgorithmus für die Schwellenwerte (TH1-1, TH2-1, ..., THn-1; TH1-2, TH2-2, ..., THn-2; TH1-n, TH2-n, ..., THn-n) über einen Satelliten (S1, S2; ..., Sn) übertragen wird.

**4.** Verfahren nach Anspruch 1, wobei der Schritt (c) das Bereitstellen von Schwellenwerten (TH1-1, TH2-1, ..., THn-1; TH1-2, TH2-2, ..., THn-2; TH1-n, TH2-n, ..., THn-n) durch Übertragen mittels eines Satelliten (S1, S2; ..., Sn) aufweist.

**5.** Verfahren nach einem der Ansprüche 1 bis 4, wobei das Integritätsrisiko in einem nutzerseitigen Nutzungs-System (10) bestimmt wird.

**6.** Verfahren nach einem der Ansprüche 1 bis 5, wobei Schritt (a) und/oder Schritt (b) das Ermitteln des für die Vorhersage der Orts- und Zeitungenauigkeit des Abstrahlereignisses des Satellitensignals (RS1, RS2, ..., RSn) charakteristischen Werts (SISA1, SISA2, ... SISAn) und/oder der Integritätsdaten (ID) in einer systemseitigen zentralen Berechnungs-Station (PF) erfolgt, die Satellitensignale (RS1, RS2, ..., RSn) von erdfesten Empfangseinrichtungs-Systemen (31, 32, 33, 34) erhält.

**7.** Verfahren zum Ermitteln von für die Bestimmung des Integritätsrisikos bei der Verwendung von Satellitensignalen (RS1, RS2, ..., RSn) eines Satellitengestützten Referenziersystems, die jeweils von einem Satelliten (S1, S2, ..., Sn) stammen, erforderlichen Informationen, aufweisend die folgenden Schritte:

(h) Empfangen von Satelliteninformation, aufweisend Satellitensignale (RS1, RS2, ..., RSn) und Satellitendaten (SD1, SD2, ..., SDn), mittels erdfester Empfangseinrichtungs-Systeme (31, 32, 33, 34);

(i) Bestimmen einer Abschätzung (ESISE1, ESISE2, ..., ESISEn) für die Orts- und Zeitungenauigkeit des Abstrahlereignisses aus der Satelliteninformation;

(j) Bestimmen aus der Satelliteninformation eines für die Vorhersage der Orts- und Zeitungenauigkeit des Abstrahlereignisses des Satellitensignals (RS1, RS2, ..., RSn) charakteristischen Werts (SISA1, SISA2, ..., SISAn);

(k) Bestimmen eines für die aus Satellitensignalen (RS1, RS2, ..., RSn) bestimmte Genauigkeit in der Orts- und Zeitungenauigkeit des Abstrahlereignisses charakteristischen Werts (SISMA1, SISMA2, ..., SISMAn); (1) Bestimmen von mindestens 2 Schwellenwerten (TH1-1, TH2-1, ...; TH1-2, TH2-2, ...), wobei ein erster Schwellenwert (TH1-1, ..., TH2-1,..., THn-1) für eine erste Hypothese Anwendung findet, die davon ausgeht, dass ein Satellit nicht "ok" ist, und ein zweiter kleinerer Schwellenwert (TH1-2, TH2-2, ..., THn-2) für eine zweite Hypothese Anwendung findet, die davon ausgeht, dass gleichzeitig zwei Satelliten "nicht ok" sind, aus einem für die Vorhersage der Orts- und Zeitungenauigkeit des Abstrahlereignisses des Satellitensignals (RS1, RS2, ..., RSn) charakteristischen Wert (SISA1, SISA2, ..., SISAn) und einem für die aus Satellitensignalen (RS1, RS2, ..., RSn) bestimmte Genauigkeit in der Orts- und Zeitungenauigkeit des Abstrahlereignisses charakteristischen Wert (SISMA1, SISMA2, ..., SISMAn);

(m) Bestimmen von Integrity Flags (IF) für Satelliten (S1, S2, ..., Sn) unter Zugrundelegung mehrerer Hypothesen nach folgendem Verfahren:

(n) Vergleichen der Abschätzung (ESISE1, ESISE2, ..., ESISEn) für die Orts- und Zeitungenauigkeit des Abstrahlereignisses für jeden der zu prüfenden Satelliten (S1, S2, ..., Sn) mit dem jeweils ersten Schwellenwert (TH1-1, ..., TH2-1,..., THn-1) für die erste Hypothese, die davon ausgeht, dass ein Satellit nicht "ok" ist, und Setzen der Integrity Flag (IF) für diesen Satelliten auf "nicht ok", falls die Abschätzung größer ist als der Schwellenwert; und

(q) Vergleichen von allen möglichen 2er-Kombinationen von Satelliten (S1, S2, ..., Sn) die jeweilige Abschätzungen (ESISE1, ESISE2, ..., ESISEn) für die Orts- und Zeitungenauigkeit des Abstrahlereignisses des zu prüfenden Satelliten (S1, S2, ..., Sn) mit dem jeweils zweiten Schwellenwert (TH1-2, ..., TH2-2,..., THn-2) für die zweite Hypothese, die davon ausgeht, dass gleichzeitig 2 Satelliten nicht "ok" sind und Setzen der Integrity Flag (IF) für diese beiden Satelliten auf "nicht ok", falls die Abschätzung beide male größer ist als der entsprechende Schwellenwert; und

(r) Bereitstellen der Integrity Flags (IF) an ein Nutzungs-System (10) zur Bestimmung des Integritätsrisikos.

**8.** Verfahren nach Anspruch 7, ferner aufweisend den Schritt des Bereitstellens der für die Vorhersage der Orts- und Zeitungenauigkeit des Abstrahlereignisses des Satellitensignals (RS1, RS2, ..., RSn) charakteristischen Werte (SISA1, SISA2, ..., SISAn) an ein Nutzungs-System (10).

**9.** Integritäts-Modul () zur Berechnung eines Integritätsrisikos bei der Verwendung von Satellitensignalen (RS1, RS2, ..., RSn) eines Satellitengestützten Referenziersystems die jeweils von einem Satelliten (S1, S2, ..., Sn) stammen, wobei in dem Integritäts-Modul ein Algorithmus implementiert ist, der zum Ausführen eines Verfahrens gemäß einem der vorangehenden Ansprüche ausgebildet ist.

**10.** Integritäts-Modul () nach Anspruch 9, ferner aufweisend einen Auswahlblock (), der aus den zur Verfügung stehenden Satellitensignalen (RS1, RS2, ..., RSn) lediglich diejenigen Signale zur weiteren Verarbeitung auswählt, deren Integrity Flag (IF) auf "ok" gesetzt ist.

**11.** Nutzungs-System (10) aufweisend ein Integritäts-Modul () gemäß Anspruch 9 oder 10.

**12.** Nutzungs-System (10) nach Anspruch 11, **dadurch gekennzeichnet, dass** es als Satellitennavigationsgerät ausgebildet ist.

**13.** Nutzungs-System (10) nach Anspruch 11 oder 12, **dadurch gekennzeichnet, dass** es als ein Fahrzeug-System für ein Fahrzeug aufweisend ein Positionsermittlungs-Modul () zur Ermittlung der Position des Fahrzeugs ausgebildet ist, wobei durch das Integritäts-Modul ein Integritätsrisiko für die Positonsdaten des Fahrzeugs ermittelt wird.

**14.** Nutzungs-System (10) nach Anspruch 13, wobei das Nutzungs-System (10) derart ausgebildet ist, dass es bei Überschreiten eines Schwellenwerts (VAL, HAL) für das Integritätsrisiko ein Warnsignal erzeugt, das geeignet ist, die Verwendung der Positionsdaten des Fahrzeugs durch an das Nutzungs-System (10) angeschlossene Module zu verhindern.

**15.** Zentrale Berechnungsstation (PF) zum Ermitteln von für die Bestimmung des Integritätsrisikos bei der Verwendung von Satellitensignalen (RS1, RS2, ..., RSn) eines Satellitengestützten Referenziersystems, die jeweils von einem Satelliten (S1, S2, ..., Sn) stammen, erforderlichen Informationen, wobei in der zentralen Berechnungsstation (PF) ein Algorithmus implementiert ist, der zum Ausführen eines Verfahrens gemäß einem der Ansprüche 7 und 8 ausgebildet ist.

**16.** Satellitengestütztes Referenziersystem aufweisend mindestens eine Vorrichtung gemäß einem der Ansprüche 9 bis 15.

**17.** Computer-Programm zur Durchführung eines Verfahrens gemäß einem der Ansprüche 1 bis 8.

**18.** Computer-Programm-Produkt beinhaltend einen maschinenlesbaren Programmträger, auf dem ein Computer-Programm gemäß Anspruch 15 in der Form von elektronisch und/oder optisch lesbaren Steuersignalen gespeichert ist.

**Claims**

**1.** Method for determining the integrity risk in the use of satellite signals (RS1, RS2, ... , RSn) of a satellite-assisted referencing system, which originate from a respective satellite (S1, S2, ..., Sn), having the following steps:

(a) provision of a value (SISA1, SISA2, ..., SISAn) which is characteristic for the prediction of the position and time inaccuracy of the emission event of the satellite signal (RS1, RS2, ..., RSn),

(b) provision of integrity data (ID) for at least some of the satellites (S1, S2, ..., Sn), having an integrity flag (IF1, IF2, ..., IFn) which indicates whether the corresponding satellite signal is "ok" or "not ok", and of a value (SISMA1, SISMA2, ..., SISMAn) which is characteristic of the accuracy, determined from satellite signals (RS1, RS2, ..., RSn), in the position and time inaccuracy of the emission event;

(c) provision of at least 2 threshold values (TH1-1, TH2-1, ...; TH1-2, TH2-2, ...), with a first threshold value (TH1-1, ..., TH2-1, ..., THn-1) being used for a first hypothesis which is based on the assumption that a satellite is not "ok", and with a second, lower threshold value (TH1-2, TH2-2, ..., THn-2) being used for a second hypothesis which is based on the assumption that two satellites are "not ok" at the same time;

(d) determination of a zero integrity risk for a "zero" hypothesis which is based on the assumption that all of the satellites whose integrity flag is set to "ok" are operating correctly, based on the value (SISA1, SISA2, ..., SISAn) which is characteristic of the prediction of the position and time inaccuracy of the emission event of the satellite signal (RS1, RS2, ..., RSn);

(e) determination of a first integrity risk for a first hypothesis, which is based on the assumption that one of the satellites whose integrity flag is set to "ok" is not operating correctly, based on the value (SISMA1, SISMA2, ..., SISMAn) which is characteristic of the accuracy, determined from satellite signals (RS1, RS2, ..., RSn), in the position and time inaccuracy of the emission event, the value (SISA1, SISA2, ..., SISAn) which is characteristic of the prediction of the position and time inaccuracy of the emission event of the satellite signal (RS1, RS2, ..., RSn), and the first threshold value (TH1-1, TH2-1, ..., THn-1);

(f) determination of a second integrity risk for a second hypothesis, which is based on the assumption that two of the satellites whose integrity flag is set to "ok" are not operating correctly at the same time, based on the value (SISMA1, SISMA2, ..., SISMAn) which is characteristic of the accuracy, determined from satellite signals (RS1, RS2, ..., RSn), in the position and time inaccuracy of the emission event, the value (SISA1, SISA2, ..., SISAn) which is characteristic of the prediction of the position and time inaccuracy of the emission event of the satellite signal (RS1, RS2, ..., RSn), and the second threshold value (TH1-2, TH2-2, ..., THn-2); and

(g) determination of the overall integrity risk from the integrity risks determined in steps (d) to (f).

2. Method according to Claim 1, with step (c) comprising the calculation of threshold values (TH1-1, TH2-1, ..., THn-1; TH1-2, TH2-2, ..., THn-2; TH1-n, TH2-n, ..., THn-n) from a value (SISA1, SISA2, ..., SISAn) which is characteristic of the prediction of the position and time inaccuracy of the emission event of the satellite signal (RS1, RS2, ..., RSn), and from a value (SISMA1, SISMA2, ..., SISMAn) which is characteristic of the accuracy, determined from satellite signals (RS1, RS2, ..., RSn) in the position and time inaccuracy of the emission event.

3. Method according to Claim 2, with the calculation algorithm for the threshold values (TH1-1, TH2-1, ..., THn-1; TH1-2, TH2-2, ..., THn-2; TH1-n, TH2-n, ..., THn-n) being transmitted via a satellite (S1, S2, ..., Sn).

4. Method according to Claim 1, with the step (c) comprising the provision of threshold values (TH1-1, TH2-1, ..., THn-1; TH1-2, TH2-2, ..., THn-2; TH1-n, TH2-n, ..., THn-n) by transmission by means of a satellite (S1, S2; ... , Sn).

5. Method according to one of Claims 1 to 4, with the integrity risk being determined in a user-end usage system (10).

6. Method according to one of Claims 1 to 5, with step (a) and/or step (b) comprising the determination of the value (SISA1, SISA2, ..., SISAn) which is characteristic of the prediction of the position and time inaccuracy of the emission event of the satellite signals (RS1, RS2, ..., RSn), and/or of the integrity data (ID) in a system-end central calculation station (PF), which receives satellite signals (RS1, RS2, ..., RSn) from ground-based receiving device systems (31, 32, 33, 34).

7. Method for determining information, which is required for determining the integrity risk by using satellite signals (RS1, RS2, ..., RSn) from a satellite-assisted referencing system, which originate from a respective satellite (S1, S2, ...., Sn), having the following steps:

(h) reception of satellite information, having satellite signals (RS1, RS2, ..., RSn) and satellite data (SD1, SD2, ..., SDn), by means of ground-based receiving device systems (31, 32, 33, 34);

(i) determination of an estimate (ESISE1, ESISE2, ..., ESISEn) for the position and time inaccuracy of the emission event from the satellite information;

(j) determination from the satellite information of a value (SISA1, SISA2, ..., SISAn) which is characteristic of the prediction of the position and time inaccuracy of the emission event of the satellite signal (RS1, RS2, ..., RSn);

(k) determination of a value (SISMA1, SISMA2, ..., SISMAn), which is characteristic of the accuracy, determined from satellite signals (RS1, RS2, ..., RSn), in the position and time inaccuracy of the emission event;

(1) determination of at least 2 threshold values (TH1-1, TH2-1, ...; TH1-2, TH2-2, ...), with a first threshold value (TH1-1, ..., TH2-1, ..., THn-1) being used for a first hypothesis which is based on the assumption that a satellite is not "ok", and with a second, lower threshold value (TH1-2, TH2-2, ..., THn-2) being used for a second hypothesis which is based on the assumption that two satellites are "not ok" at the same time, from a value (SISA1, SISA2, ..., SISAn), which is characteristic of a prediction of the position and time inaccuracy of the emission event of the satellite signal (RS1, RS2, ..., RSn), and from a value (SISMA1, SISMA2, ..., SISMAn) which is characteristic of the accuracy, determined from satellite signals (RS1, RS2, ..., RSn), in the position and time inaccuracy of the emission event;

(m) determination of integrity flags (IF) for satellites (S1, S2, ..., Sn) on the basis of a plurality of hypotheses using the following method:

(n) comparison of the estimate (ESISE1, ESISE2, ..., ESISEn) for the position and time inaccuracy of the emission event for each of the satellites (S1, S2, ..., Sn) to be checked with the respective first threshold value (TH1-1, ..., TH2-1, ..., THn-1), for the first hypothesis, which is based on the assumption that a satellite is not "ok", and setting of the integrity flag (IF) for this satellite to "not ok" when the estimate is greater than the threshold value; and

(q) comparison, for all the possible combinations for the 2 satellites (S1, S2, ..., Sn), of the respective estimates (ESISE1, ESISE2, ..., ESISEn) for the position and time inaccuracy of the emission event of the satellite (S1, S2, ..., Sn) to be checked with the respective second threshold value (TH1-2, ..., TH2-2, ..., THn-2) for the second hypothesis, which is based on the assumption that 2 satellites are not "ok" at the same time, and setting of the integrity flag (IF) for these two satellites to "not ok" when the estimate on both occasions is greater than the corresponding threshold value; and

(r) provision of the integrity flags (IF) to a usage system (10) in order to determine the integrity risk.

8. Method according to Claim 7, furthermore having the step of provision of the values (SISA1, SISA2, ..., 818An) which are characteristic of the prediction of the position and time inaccuracy of the emission event of the satellite signals (RS1, RS2, ..., RSn) to a usage system (10).

9. Integrity module () for calculating an integrity risk in the use of satellite signals (RS1, RS2, ..., RSn) of a satellite-assisted referencing system, which originate from a respective satellite (S1, S2, ..., Sn), with an algorithm which is designed to carry out a method according to one of the preceding claims being implemented in the integrity module.

10. Integrity module () according to Claim 9, furthermore having a selection block () which selects from the available satellite signals (RS1, RS2, ..., RSn) only those signals for further processing whose integrity flag (IF) is set to "ok".

11. Usage system (10) having an integrity module () according to Claim 9 or 10.

12. Usage system (10) according to Claim 11, **characterized in that** the system is in the form of a satellite navigation appliance.

13. Usage system (10) according to Claim 11 or 12, **characterized in that** the system is in the form of a vehicle system for a vehicle having a position-finding module () for determining the position of the vehicle, with the integrity module determining an integrity risk for the position data of the vehicle.

14. Usage system (10) according to Claim 13, with the usage system (10) being designed such that it produces a warning signal for the integrity risk if a threshold value (VAL, HAL) is exceeded, that warning signal being suitable for preventing use of the position data for the vehicle by modules which are connected to the usage system (10).

15. Central calculation station (PF) for determining information which is required for determining the integrity risk in the use of satellite signals (RS1, RS2, ..., RSn) of a satellite-assisted referencing system, which originate from a respective satellite (S1, S2, ..., Sn), with an algorithm which is designed to carry out a method according to one of Claims 7 and 8 being implemented in the central calculation station (PF).

**16.** Satellite-assisted referencing system having at least one apparatus according to one of Claims 9 to 15.

**17.** Computer program for carrying out a method according to one of Claims 1 to 8.

**18.** Computer program product containing a machine-legable program storage medium, in which a computer program according to Claim 15 is stored in the form of electronically and/or optically legable control signals.


**Revendications**

**1.** Procédé pour déterminer le risque d'intégrité lors de l'utilisation de signaux satellites (RS1, RS2,..., RSn) d'un système de référence assisté par satellite, qui proviennent chacun d'un satellite (S1, S2, ..., Sn), présentant les étapes suivantes :

(a) mise à disposition d'une valeur caractéristique (SI-SA1, SISA2, ..., SISAn) pour la prédiction de l'imprécision de lieu et de temps de l'événement d'émission du signal satellite (RS1, RS2, ..., RSn) ;
(b) mise à disposition de données d'intégrité (ID) pour au moins une partie des satellites (S1, S2, ..., Sn), présentant un « integrity flag » (IF1, IF2, ..., IFn) qui indique si le signal satellite correspondant est « ok » ou « non ok », et d'une valeur caractéristique (SISMA1, SISMA2, ..., SISMAn) pour la précision déterminée à partir des signaux satellites (RS1, RS2, ..., RSn) dans l'imprécision de lieu et de temps de l'événement d'émission ;
(c) mise à disposition d'au moins 2 valeurs seuils (TH1-1, TH2-1, ..., TH1-2, TH2-2, ...), une première valeur seuil (TH1-1, ..., TH2-1, ..., THn-1) valant pour une première hypothèse, qui part du fait qu'un satellite n'est pas « ok », et une seconde valeur seuil plus faible (TH1-2, TH2-2, ..., THn-2) valant pour une seconde hypothèse, qui part du fait que deux satellites sont simultanément « non ok » ;
(d) détermination d'un risque d'intégrité zéro pour une hypothèse « zéro », qui part du fait que tous les satellites dont l'integrity flag est sur « ok » fonctionnent sans erreur, sur la base de la valeur caractéristique (SISA1, SISA2, ..., SISAn) pour la prédiction de l'imprécision de lieu et de temps de l'événement d'émission du signal satellite (RS1, RS2, ..., RSn) ;
(e) détermination d'un premier risque d'intégrité pour une première hypothèse, qui part du fait que l'un des satellites dont l'integrity flag est sur « ok » ne fonctionne pas sans erreur, sur la base de la valeur caractéristique (SISMA1, SISMA2, ..., SISMAn) pour la précision déterminée à partir des signaux satellites (RS1, RS2, ..., RSn) dans l'imprécision de lieu et de temps de l'événement d'émission, de la valeur caractéristique (SISA1, SISA2, ..., SISAn) pour la prédiction de l'imprécision de lieu et de temps de l'événement d'émission du signal satellite (RS1, RS2, ..., RSn), et de la première valeur seuil (TH1-1, TH2-1, ..., THn-1) ;
(f) détermination d'un second risque d'intégrité pour une seconde hypothèse, qui part du fait que deux des satellites dont l'integrity flag est sur « ok » ne fonctionnent pas simultanément sans erreur, sur la base de la valeur caractéristique (SISMA1, SISMA2, ..., SISMAn) pour la précision, déterminée à partir des signaux satellites (RS1, RS2, ..., RSn), dans l'imprécision de lieu et de temps de l'événement d'émission, de la valeur caractéristique (SISA1, SISA2, ..., SISAn) pour la prédiction de l'imprécision de lieu et de temps de l'événement d'émission du signal satellite (RS1, RS2, ..., RSn), et de la seconde valeur seuil (TH1-2, TH2-2, ..., THn-2) ; et
(g) recherche du risque d'intégrité global à partir des risques d'intégrité définis dans les étapes (d) à (f).

**2.** Procédé suivant la revendication 1, dans lequel l'étape (c) comprend le calcul de valeurs seuils (TH1-1, TH2-1, ..., THn-1 ; TH1-2, TH2-2, ..., THn-2 ; TH1-n, TH2-n, ..., THn-n) à partir d'une valeur caractéristique (SISA1, SISA2, ..., SISAn) pour la prédiction de l'imprécision de lieu et de temps de l'événement d'émission du signal satellite (RS1, RS2, ..., RSn), et d'une valeur caractéristique (SISMAL, SISMA2, ..., SISMAn) pour la précision déterminée à partir des signaux satellites (RS1, RS2, ..., RSn) dans l'imprécision de lieu et de temps de l'événement d'émission.

**3.** Procédé suivant la revendication 2, dans lequel l'algorithme de calcul pour les valeurs seuils (TH1-1, TH2-1, ..., THn-1 ; TH1-2, TH2-2, ..., THn-2 ; TH1-n, TH2-n, ..., THn-n) est transmis par l'intermédiaire d'un satellite (S1, S2 ; ..., Sn).

**4.** Procédé suivant la revendication 1, dans lequel l'étape (c) comprend la mise à disposition de valeurs seuils (TH1-1, TH2-1, ..., THn-1 ; TH1-2, ..., THn-2 ; TH1-n, TH2-n, ..., THn-n) par transmission au moyen d'un satellite (S1, S2 ..., Sn).

**5.** Procédé suivant l'une des revendications 1 à 4, dans lequel le risque d'intégrité est défini dans un système d'utilisation (10) du côté utilisateur.

**6.** Procédé suivant l'une des revendications 1 à 5, dans lequel est effectuée dans l'étape (a) et/ou l'étape (c) la recherche de la valeur caractéristique (SISA1, SISA2, ..., SISAn) pour la prédiction de l'imprécision de lieu et de temps de l'événement d'émission du signal satellite (RS1, RS2, ..., RSn) et/ou des données d'intégrité (ID) dans un poste de calcul central (PF) du côté système, qui reçoit les signaux satellites (RS1, RS2, ..., RSn) de systèmes de récepteurs (31, 32, 33, 34) liés à la terre.

**7.** Procédé de recherche d'informations requises pour la détermination du risque d'intégrité dans l'utilisation de signaux satellites (RS1, RS2, ..., RSn) d'un système de référence assisté par satellite, qui proviennent chacun d'un satellite (S1, S2, ..., Sn), comprenant les étapes suivantes :

(h) réception d'informations satellites, comportant des signaux satellites (RS1, RS2, ..., RSn) et des données satellites (SD1, SD2, ..., SDn), au moyen de systèmes récepteurs (31, 32, 33, 34) liés à la terre ;
(i) détermination d'une estimation (ESISE1, ESISE2, ..., ESISEn) pour l'imprécision de lieu et de temps de l'événement d'émission à partir de l'information satellite ;
(j) détermination à partir de l'information satellite d'une valeur caractéristique (SISA1, SISA2, ..., SISAn) pour la prédiction de l'imprécision de lieu et de temps de l'événement d'émission du signal satellite (RS1, RS2, ... RSn)
(k) détermination d'une valeur caractéristique (SISMA1, SISMA2, ..., SISMAn) pour la précision déterminée à partir des signaux satellites (RS1, RS2, ..., RSn) dans l'imprécision de lieu et de temps de l'événement d'émission ;
(1) détermination d'au moins 2 valeurs seuils (TH1-1, TH2-1, ... ; TH1-2, TH2-2, ...), une première valeur seuil (TH1-1, ..., TH2-1, ..., THn-1) valant pour une première hypothèse, qui part du fait qu'un satellite n'est pas « ok », et une seconde valeur seuil, plus faible (TH1-2, TH2-2, ..., THn-2), valant pour une seconde hypothèse, qui part du fait que deux satellites sont simultanément « non ok », à partir d'une valeur caractéristique (SISA1, SISA2, ..., SISAn) pour la prédiction de l'imprécision de lieu et de temps de l'événement d'émission du signal satellite (RS1, RS2, ..., RSn), et d'une valeur caractéristique (SISMA1, SISMA2, ..., SISMAn) pour la précision déterminée à partir des signaux satellites (RS1, RS2, ..., RSn) dans l'imprécision de lieu et de temps de l'événement d'émission.
(m) détermination de l'integrity flag (IF) pour des satellites (S1, S2, ..., Sn) en prenant pour base plusieurs hypothèses selon le procédé suivant :

(n) comparaison de l'estimation (ESISE1, ESISE2, ..., ESISEn) pour l'imprécision de lieu et de temps de l'événement d'émission pour chacun des satellites (S1, S2, ... Sn) à contrôler avec le premier seuil respectif (TH1-1, ..., TH2-1, ..., THn-1) pour la première hypothèse, qui part du fait qu'un satellite n'est pas « ok », et fixation de l'integrity flag (IF) pour ce satellite sur « non ok », si l'estimation est supérieure à la valeur seuil ; et
(q) comparaison sur toutes les combinaisons possibles de deux satellites (S1, S2, ..., Sn) des estimations respectives (ESISE1, ESISE2, ..., ESISEn) pour l'imprécision de lieu et de temps de l'événement d'émission du satellite à contrôler (S1, S2, ..., Sn) avec la seconde valeur seuil respective (TH1-2, ..., TH2-2, ..., THn-2) pour la seconde hypothèse, qui part du fait que 2 satellites ne sont simultanément pas « ok », et fixation de l'integrity flag (IF) pour ces deux satellites sur « non ok », si l'estimation est les deux fois plus élevée que la valeur de seuil correspondante ; et

(r) mise à disposition de l'integrity flag (IF) à un système d'utilisation (10) pour la détermination du risque d'intégrité.

**8.** Procédé suivant la revendication 7, comprenant en outre l'étape d'affectation des valeurs caractéristiques (SI-SA1, SISA2, ..., SISAn) pour la prédiction de l'imprécision de lieu et de temps de l'événement d'émission du signal satellite (RS1, RS2, ..., RSn) à un système d'utilisation (10).

**9.** Module d'intégrité () pour le calcul d'un risque d'intégrité dans l'utilisation de signaux satellites (RS1, RS2, ..., RSn) d'un système de référence assisté par satellite, qui proviennent chacun d'un satellite (S1, S2, ..., Sn), module dans lequel est implémenté un algorithme conçu pour la mise en oeuvre d'un procédé suivant l'une des revendications précédentes.

**10.** Module d'intégrité () suivant la revendication 9, comprenant en outre un bloc de sélection () qui sélectionne pour le traitement ultérieur, à partir des signaux satellites (RS1, RS2, ..., RSn) disponibles, uniquement les signaux dont l'integrity flag (IF) est fixé sur « ok ».

**11.** Système d'utilisation (10) comportant un module d'intégrité () suivant l'une des revendications 9 et 10.

**12.** Système d'utilisation (10) suivant la revendication 11, **caractérisé en ce qu'**il est réalisé sous la forme d'un appareil de navigation par satellite.

**13.** Système d'utilisation (10) suivant l'une des revendications 11 et 12, **caractérisé en ce qu'**il est réalisé sous la forme d'un système pour un véhicule comportant un module de repérage () pour déterminer la position du véhicule, un risque d'intégrité pour les données de position du véhicule étant déterminé par le module d'intégrité.

**14.** Système d'utilisation (10) suivant la revendication 13, dans lequel le système (10) est réalisé de telle sorte qu'il génère un signal d'alarme lors du dépassement par le haut d'une valeur seuil (VAL, HAL) pour le risque d'intégrité, lequel signal se prête à empêcher l'utilisation des données de position du véhicule par des modules raccordés au système d'utilisation (10).

**15.** Poste de calcul central (PF) pour la recherche d'informations requises pour la détermination du risque d'intégrité dans l'utilisation de signaux satellites (RS1, RS2, ..., RSn) d'un système de référence assisté par satellite, qui proviennent chacun d'un satellite (S1, S2, ..., Sn), poste de calcul central (PF) dans lequel est implémenté un algorithme conçu pour la mise en oeuvre d'un procédé suivant l'une des revendications 7 et 8.

**16.** Système de référence assisté par satellite comprenant au moins un dispositif suivant l'une des revendications 9 à 15.

**17.** Programme d'ordinateur pour la mise en oeuvre d'un procédé suivant l'une des revendications 1 à 8.

**18.** Produit de programme d'ordinateur comprenant un support de programme lisible par machine, sur lequel est mémorisé un programme d'ordinateur suivant la revendication 15 sous la forme de signaux de contrôle lisibles par voie électronique et/ou optique.

S2

S1

RS2
SD2

S3

RS3
SD3
ID

S4

RS1
SD1

RS4
SD4

RS3
RS1    RS2    SD3    RS4
SD1    SD2    ID     SD4

ID

Positioni
erungs-
Modul

Integrit
äts-
Modul

IPF

Warn-
Modul

10

RS3  RS3  RS4
SD3  SD3  SD4

RS1  RS3  RS3
SD1  SD3  SD3

| 31 | 32 |  | 33 | 34 |

**Fig. 1**

$p_y(y)$

$\sqrt{\sigma_{SISA}^2 + \sigma_{check}^2}$

$\dfrac{P_{FA}}{2}$

$\dfrac{P_{FA}}{2}$

-TH

TH

Fig. 2

Fig. 3

# Wahrscheinlichkeiten mit SIGMA$_{SISA}$=0.65 und SIGMA$_{CHECK}$=0.30

**Schwelle 1 [m]**

**Fig. 4**

**Wahrscheinlichkeiten mit SIGMA$_{SISA}$=0.65 und SIGMA$_{CHECK}$=0.65**

Fig. 5

## Wahrscheinlichkeiten mit SIGMA$_{SISA}$=0.95 und SIGMA$_{CHECK}$=0.30

Fig. 6

Fig. 7

Fig. 8

Fig. 9

**EP 1 728 092 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 04022307 A